# EUROPEAN PATENT SPECIFICATION

(11) **EP 3 845 502 B1**
(45) Date of publication and mention of the grant of the patent: **01.02.2023**
(21) Application number: 19874400.5
(22) Date of filing: 11.10.2019
(51) Int. Cl.: C03B 23/023, B21D 37/02, C03B 23/03, C03B 35/14

(54) **BENDING DEVICE AND BENDING METHOD**
BIEGEVORRICHTUNG UND BIEGEVERFAHREN
DISPOSITIF ET PROCÉDÉ DE CINTRAGE

(30) Priority: 19.10.2018 JP 2018197661
(43) Date of publication of application: 07.07.2021
(73) Proprietor: AGC INC., Chiyoda-ku, Tokyo 1008405 (JP)
(72) Inventor: FUNATSU, Shiro, Tokyo 100-8405 (JP); MASUDA, Kenichi, Tokyo 100-8405 (JP); FUKUSHI, Takanori, Tokyo 100-8405 (JP)
(74) Representative: Müller-Boré & Partner Patentanwälte PartG mbB
(86) International application number: PCT/JP2019/040274
(87) International publication number: WO 2020/080305

(56) References cited:
- JP-A- H10 225 734
- JP-A- S60 191 621
- JP-A- S60 191 621
- JP-U- 3 057 259
- US-A- 3 832 153
- US-A- 5 498 275

## Description

### FIELD OF THE INVENTION

The present disclosure relates to a bending apparatus according to claim 1 and a bending method according to claim 10.

### BACKGROUND OF THE INVENTION

The bending jig disclosed in Patent Document 1 includes a flexible plate-like member abutted against a glass plate and a plurality of connecting methods for connecting one end to a frame and the other end to a plate-like body to maintain a desired distance between the frame and the plate-like member. The connecting methods include a pin-like member and a pin-like member support seat that slidably supports the pin-like member along its length and supports the pin-like member in a manner that allows the installing angle to the frame to be changed. By sliding the pin-like member along its length and changing the installing angle of the pin-like member, the curved surface shape of the plate-like member can be changed. The curved shape of the plate-like member is modified to match the target curved shape of the glass plate. Thus, each time the curved shape of the target of the glass plate is changed, the mold does not need to be fabricated.

### RELATED-ART DOCUMENT

JPS60191621 A discloses an upper mold and upper and lower forming rods. The upper face of a plate to be formed is pressed by a reference forming face consisting of the tips of the upper forming rods by lowering the upper mold, wherein tensile stress is generated in each direction of the face. US3832153 A discloses an adjustable form for press-shaping sheets of plastic material such as hot glass, and a plurality of straight bars disposed in parallel, side-by-side relation, each mounted individually for translation with respect to the others.

### Patent Documents

Patent Document 1: Japanese Patent Application Laid-Open No. 2003-212574

### SUMMARY OF THE INVENTION

### Problems to be solved by the Invention

According to Patent Document 1, the pin-like member is slid along its longitudinal direction and the installation angle of the pin-like member is changed for each pin-like member, and these operations are complicated. Although these operations can be performed automatically rather than manually, for each pin-like member, a driving source is required to slide the pin-like member along its length and a driving source is required to change the installation angle of the pin-like member. As the number of pin-like members increases, the number of driving sources become enormous, because the number of driving sources is twice the number of pins-like members. It also requires the individualized control of an enormous number of driving sources.

One aspect of the present disclosure provides a technique in which a mold with low heat resistance can be used to reduce mold fabrication costs and mold fabrication times, and multiple pins can be moved with fewer driving sources than the number of pins.

### Means for Solving the Problem

A bending apparatus includes a heater that heats a forming plate to be bent; a first pin group including three or more of first pins that contact a first main surface of the forming plate; a first guide plate which supports three or more of the first pins parallel to each other and independently movably supports three or more of the first pins in a longitudinal direction of the first pins; a first movable plate that is arranged on a side opposite to the forming plate with respect to the first guide plate and on which a first mold having a first curved surface that contacts the first pin group is installed; and a first moving mechanism for moving the first movable plate relative to the first guide plate in the longitudinal direction of the first pins.

### Effects of the Invention

One aspect of the present disclosure provides a technique in which a mold with low heat resistance can be used to reduce mold fabrication costs and mold fabrication times, and multiple pins can be moved with fewer driving sources than the number of pins.

### BRIEF DESCRIPTION OF THE DRAWINGS

FIG. 1 is a diagram illustrating a bending apparatus according to a first embodiment;
FIG. 2 is a diagram illustrating an example of a state when a rise of a first movable plate illustrated in FIG. 1 is completed;
FIG. 3 is a diagram illustrating an example of an arrangement of first pins illustrated in FIG. 1;
FIG. 4 is a diagram illustrating an example of a flow passage through which a refrigerant passes in a first guide plate illustrated in FIG. 1;
FIG. 5 is a flowchart illustrating a bending method according to the first embodiment;
FIG. 6 is a diagram illustrating a bending apparatus according to a second embodiment;
FIG. 7 is a diagram illustrating an example of a state when a rise of a first movable plate illustrated in FIG. 6 is completed;
FIG. 8 is a flowchart illustrating a bending method according to the second embodiment;
FIG. 9 is a diagram illustrating a bending apparatus according to a first modified example of the second embodiment;
FIG. 10 is a diagram illustrating an example of a state when a rise of a first movable plate illustrated in FIG. 9 is completed;
FIG. 11 is a flowchart illustrating a bending method according to a first modified example of the second embodiment;
FIG. 12 is a diagram illustrating a bending apparatus according to a second modified example of the second embodiment;
FIG. 13 is a diagram illustrating an example of a state when a lowering of a first movable plate illustrated in FIG. 12 is completed;
FIG. 14 is a flowchart illustrating a bending method according to a second modified example of the second embodiment;
FIG. 15 is a diagram illustrating a bending apparatus according to a third embodiment;
FIG. 16 is a diagram illustrating an example of a state when a rise of a first movable plate illustrated in FIG. 15 is completed;
FIG. 17 is a diagram illustrating an example of a state when a lowering of a second movable plate illustrated in FIG. 16 is completed;

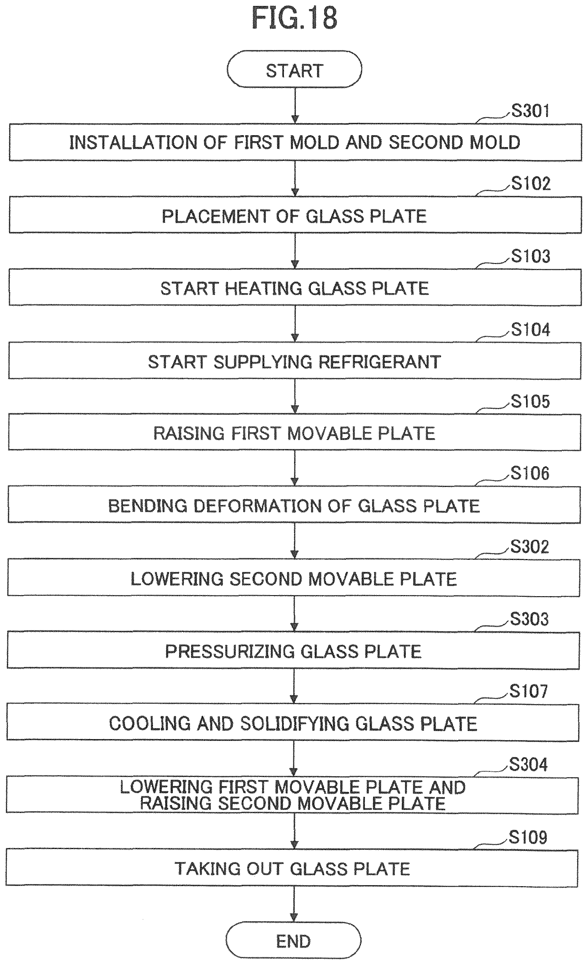

FIG. 18 is a flowchart illustrating a bending method according to a third embodiment;
FIG. 19 is a diagram illustrating an example of a state when a lowering of a second movable plate illustrated in FIG. 15 is completed; and
FIG. 20 is a flowchart illustrating a bending method according to a modified example of the third embodiment.

### DETAILED DESCRIPTION OF THE INVENTION

Hereinafter, embodiments of the present disclosure will be described with reference to the drawings. In each drawing, the same or corresponding structure is indicated by the same or corresponding reference numerals and the description thereof may be omitted. In each drawing, the X-axis direction, the Y-axis direction, and the Z-axis direction are orthogonal to each other. The X-axis direction and the Y-axis direction are horizontal directions and the Z-axis is a vertical direction. Downward in the vertical direction is also called downward vertical direction, and upward in the vertical direction is also called upward.

### (First Embodiment)

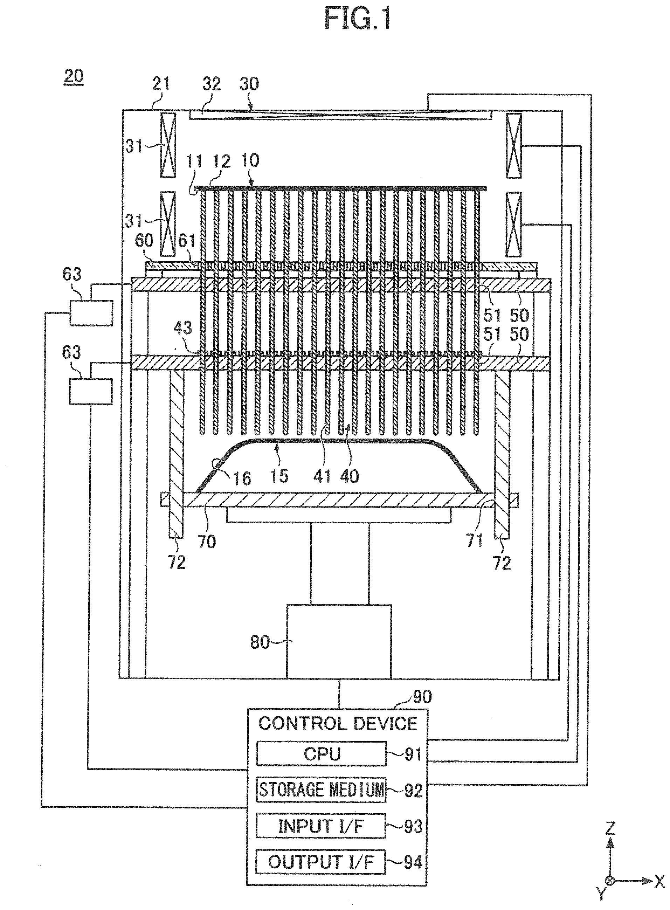

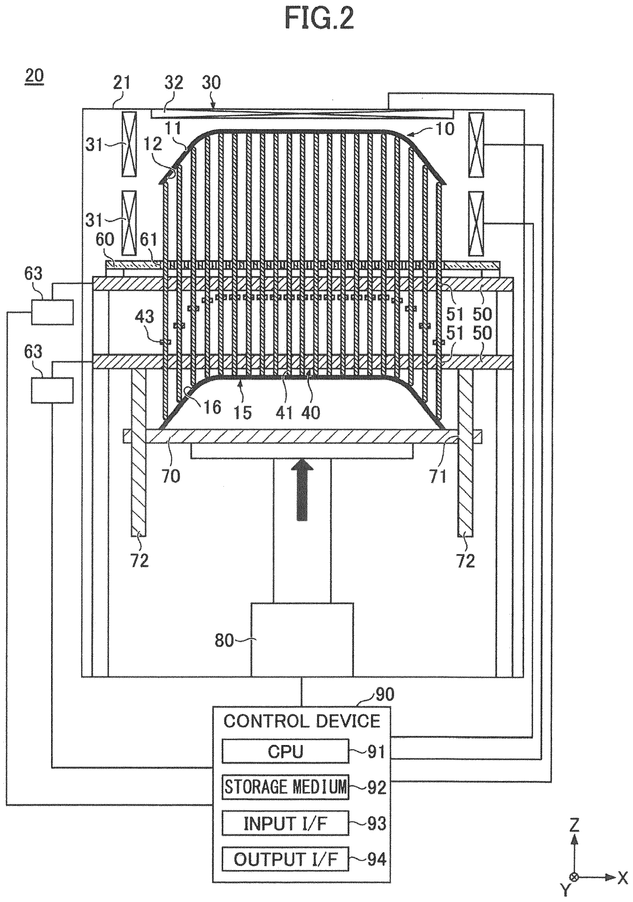

FIG. 1 is a diagram illustrating a bending apparatus according to a first embodiment. FIG. 2 is a diagram illustrating an example of a state when a rise of a first movable plate illustrated in FIG. 1 is completed. In the embodiment, a glass plate 10 is used as a forming plate to be bent, but the forming plate is not limited to the glass plate 10. The forming plate may be softened by heating.

When a forming plate is a glass plate 10, for example, inorganic glass such as soda lime glass, alumino silicate, organic glass, and the like may be used as the glass plate 10. When the glass plate 10 is inorganic glass, the glass plate 10 can be prepared, for example, by a float method. When a preferred thickness of the glass plate 10 is equal to or more than 0.2 mm and equal to or less than 5.0 mm, the glass plate 10 can be used as a windowpane for automobiles or a cover glass for interiors.

The bending apparatus 20 includes a heater 30 that heats the glass plate 10. The heater 30 includes, for example, a side heater 31 that heats the glass plate 10 from side to side and a top heater 32 that heats the glass plate 10 from above.

The side heater 31 is positioned vertically to surround the outer periphery of the glass plate 10. The side heater 31 may be, for example, a heater with resistance heating, such as a carbon heater, a halogen heater, or a sheath heater.

The top heater 32 is placed to cover the glass plate 10 entirely in a vertical view. As the top heater 32, a heater with resistance heating is used, for example, a PBN heater is used. The PBN heater is a heater in which an electrically insulating PBN (Pyrolytic Boron Nitride) and a conductive PG (Pyrolytic Graphite) are laminated by a CVD (Chemical Vapor Deposition) method.

The top heater 32 is fixed in the embodiment but may be able to slide vertically. When the top heater 32 is lowered, the distance between the top heater 32 and the glass plate 10 can be reduced and the glass plate 10 can be heated efficiently. Further, when the top heater 32 is raised, the setting operation of the glass plate 10 is facilitated.

The top heater 32 may slide horizontally rather than vertically. For example, the top heater 32 may slide in the Y-axis direction. Both the heating efficiency of the glass plate 10 and the setting ability of the glass plate 10 can be achieved. The top heater 32 may be able to slide in both vertical and horizontal directions.

The heating method of the heater 30 is not limited to a resistance heating. The heating method of the heater 30 may be, for example, a laser heating, far infrared heating, hot air heating, and the like. When a forming plate is a metal plate, the heating method of the heater 30 may be an induction heating.

The bending apparatus 20 includes a first pin group 40 containing three or more of first pins 41 that contact a first main surface 11 of the glass plate 10. The first main surface 11 of the glass plate 10 is, for example, a bottom surface of the glass plate 10. In this case, a second main surface 12 of the glass plate 10 is a top surface of the glass plate 10.

The first pin group 40 is placed below the glass plate 10. Each of the first pins 41 constituting the first pin group 40 is placed in parallel, for example, in the Z-axis direction. The longitudinal direction of the first pins 41 is, for example, in the Z-axis direction.

The first pins 41 may be formed of stainless steel, heat resistant steel, cemented carbide (e.g., tungsten carbide), ceramic (e.g., silicon carbide, silicon nitride, quartz), or carbon. The first pins 41 may have a coating film at least in part. The coating film may be any of a metal film, a ceramic film, a carbon film, and the like.

An upper end portion of the first pins 41 contacts the first main surface 11 of the glass plate 10. The shape of the upper end portion of the first pins 41 is not particularly limited. For example, a convex hemispherical shape may be used. The point contact between the first pins 41 and the glass plate 10 allows the glass plate 10 to bend smoothly.

The shape of the upper end portion of the first pins 41 may be cylindrical, conical, prismatic, or the like. Examples of prismatic shapes include triangular columnar, square columnar, hexagonal columnar, and the like. When the upper end portion of the first pins 41 is triangular columnar, square columnar, or hexagonal columnar, the upper end portion of the first pins 41 can be arranged without gaps, and the upper end portion of the first pins 41 can be closely disposed.

The lower end portion of the first pins 41 contacts a first curved surface 16 of a first mold 15. The shape of the lower end portion of the first pins is not particularly limited. For example, a convex hemispherical shape may be used. The first pins 41 and the first mold 15 come into point contact with each other.

The shape of the lower end portion of the first pins 41 may be cylindrical, conical, prismatic, or the like. Examples of prismatic shapes include triangular columnar, square columnar, hexagonal columnar, and the like. When the lower end portion of the first pins 41 is triangular columnar, square columnar, or hexagonal columnar, the lower end portion of the first pins 41 can be arranged without gaps, and the lower end portion of the first pins 41 can be closely disposed. The shape of the lower end portion of the first pins 41 and the shape of the upper end portion of the first pins 41 may be the same shape or different shapes.

A shape of an intermediate portion of the first pin 41 is not particularly limited. The shape is, for example, cylindrical. The intermediate portion of the first pin 41 is inserted through a first guide hole 51 of a first guide plate 50. The intermediate portion of the first pin 41 is spaced apart from an intermediate portion of another first pin 41 by the first guide hole 51. Compared with the case where the intermediate portions of the adjacent first pins 41 are arranged without any gaps, the heat capacity of the first pin group 40 can be reduced, thereby improving the heat radiation performance.

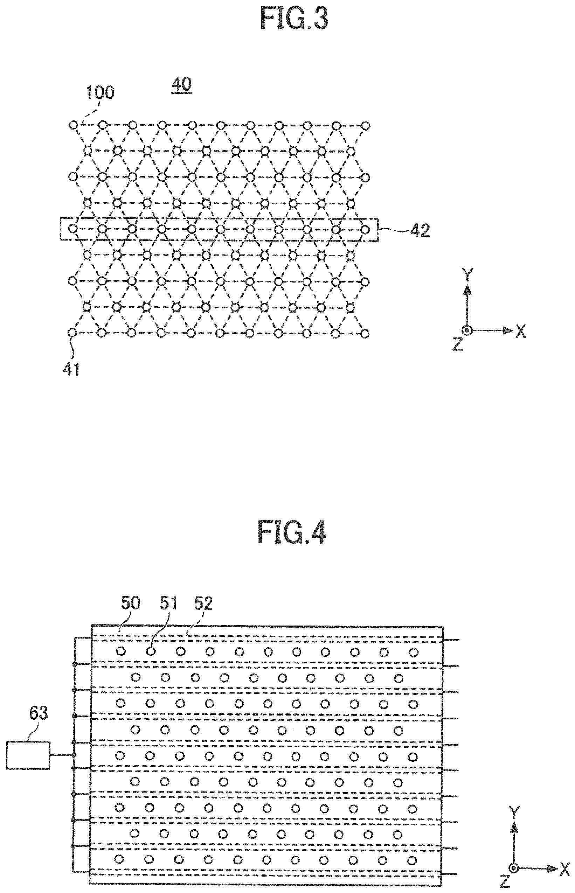

FIG. 3 is a top view illustrating an example of the arrangement of the first pins illustrated in FIG. 1. The first pin group 40 includes a first pin row 42, and the first pin row 42 includes a plurality of first pins 41 arranged in an array equally spaced in the X-axis direction. The first pin rows 42 are arranged with a plurality of pins spaced apart in the Y-axis direction, and two first pin rows 42 adjacent in the Y-axis direction is shifted in the X-axis direction. Two first pin rows 42 adjacent in the Y-axis direction differ in the X-axis position of the first pins 41.

The first pins 41 are arranged one at a time at the grid points of the equilateral triangular lattice 100 illustrated by dashed lines in FIG. 3 in the vertical view. When a single first pin 41 is set as a center point, the number of first pins 41 closest to the center point is six. The six first pins 41 closest to the center point are arranged in equal pitch (60° pitch) around the center point and are arranged in rotational symmetry (6 times symmetry). Even when the rotation angle around the vertical axis of the glass plate 10 is misaligned from the target rotation angle when the glass plate 10 is aligned with the first pin group 40, the glass plate 10 can be bent and deformed into the target shape.

The arrangement of the first pins 41 is not limited to the arrangement illustrated in FIG. 3. For example, the first pins 41 may be arranged one by one at a lattice point of an isosceles triangular lattice in the vertical view. Alternatively, the first pins 41 may be arranged one by one at the lattice point of the square grating in the vertical view. The first pins 41 may also be arranged in unequal pitch, that is, randomly arranged. However, the arrangement of the first pins 41 is most preferably as illustrated in FIG. 3.

The bending apparatus 20 includes a first guide plate 50 which supports three or more of the first pins 41 parallel to each other and independently movably supports three or more of the first pins 41 in the longitudinal direction (e.g., in the Z-axis direction). The first guide plate 50 has three or more of the first guide holes 51 that penetrate the first guide plate 50 in the longitudinal direction of the first pins 41. A single first pin 41 is inserted through each of three or more of the first guide holes 51. Accordingly, the first guide holes 51 are arranged in the same manner as the first pins 41.

The first guide plate 50 is formed of, for example, carbon, to reduce the sliding resistance to the first pins 41. The first guide plate 50 of the embodiment is formed of carbon, but the materials of the first guide plate 50 are not limited to carbon. For example, when a refrigerant is supplied to a flow passage inside the first guide plate 50, as will be described in detail below, the material of the first guide plate 50 may be a metal having a high thermal conductivity to increase the cooling efficiency.

A cross-sectional shape of the first guide hole 51 and a cross-sectional shape of the first pin 41 are not particularly limited as long as they are similar. For example, the cross-sectional shapes are circular. The inner diameter of the first guide hole 51 is formed to be slightly larger than the outer diameter of the first pin 41 for the purpose of sliding the first pin 41. A clearance between the inner peripheral surface of the first guide hole 51 and the outer peripheral surface of the first pin 41 is set based on an acceptable tilt of the first pin 41 and a sliding resistance of the first pin 41.

The smaller the clearance between the inner peripheral surface of the first guide hole 51 and the outer peripheral surface of the first pin 41, the smaller the rattling of the first pin 41 and the maximum tilt of the first pin 41. However, the sliding resistance of the first pin 41 becomes larger. The tilt of the first pin 41 is the tilt of the centerline of the first pin 41 from a predetermined line (e.g., a line extending in the Z-axis direction).

The bending apparatus 20 includes a first insulation plate 60 between the heater 30 and the first guide plate 50 for limiting the heat transfer from the heater 30 to the first guide plate 50. The changes in the amount of the clearance between the inner peripheral surface of the first guide hole 51 and the outer peripheral surface of the first pin 41 can be suppressed, because the rise of temperature of the first guide plate 50 and the dimensional change of the inner peripheral surface of the first guide hole 51 can be suppressed.

The first insulation plate 60 may absorb heat rays or may reflect heat rays in order to inhibit the transmission of heat rays, such as infrared rays. Examples of insulation materials that absorb heat rays include carbon. Further, for example, a metal oxide is used as an insulation material that reflects heat rays. The metal oxide may be deposited, for example, by a sputtering method on a matrix of metal material. Examples of insulation materials that absorb heat rays include glass wool, ceramic, or the like.

The first insulation plate 60 has three or more of the first through holes 61 that penetrate the first insulation plate 60 in the longitudinal direction of the first pins 41. Each of three or more of the first through holes 61 is inserted one by one with a first pin 41. Accordingly, the first through holes 61 are arranged in the same manner as the first pins 41. The first through holes 61 do not contact the first pins 41 unlike the first guide holes 51 so as not to interfere with the sliding of the first pins 41. The inner diameter of the first through hole 61 is larger than the inner diameter of the first guide hole 51.

The first guide plate 50 has a flow passage therein, and the bending apparatus 20 includes a first cooler 63 for supplying a refrigerant to the flow passage inside the first guide plate 50. The changes in the amount of the clearance between the inner peripheral surface of the first guide hole 51 and the outer peripheral surface of the first pin 41 can be suppressed, because the rise of temperature of the first guide plate 50 and the dimensional change of the inner peripheral surface of the first guide hole 51 can be suppressed.

FIG. 4 is a diagram illustrating an example of a flow passage through which the refrigerant passes in the first guide plate illustrated in FIG. 1. The first guide plate 50 has a flow passage 52 through which the refrigerant supplied by the first cooler 63 passes. The flow passage 52 is formed, for example, parallel to a first pin row 42 and parallel to the X-axis direction. The flow passage 52 is disposed between two adjacent first pin rows 42 in the Y-axis direction. As the refrigerant flowing through the flow passage 52, for example, water at room temperature is used. Air may be used instead of water, but water has a larger heat capacity and better cooling efficiency than air.

The maximum tilt of the first pin 41 is determined not only by the amount of clearance between the inner peripheral surface of the first guide hole 51 and the outer peripheral surface of the first pin 41, but also by the longitudinal dimension of the first guide hole 51. The larger the longitudinal dimension of the first guide hole 51, the smaller the maximum tilt of the first pin 41, but the larger the sliding resistance of the first pin 41. The sliding resistance of the first pin 41 increases because the contact area between the outer peripheral surface of the first pin 41 and the inner peripheral surface of the first guide hole 51 is large.

Therefore, two first guide plates 50 are placed at intervals in the longitudinal direction of the first pins 41, as illustrated in FIGS. 1 and 2. A single first pin 41 is inserted through two first guide holes 51 that are placed at intervals in the longitudinal direction of the first pin 41. By spacing the two first guide holes 51 through which the single first pin 41 is inserted, so that the maximum tilt of the first pin 41 can be reduced while suppressing the increase in the contact area between the inner circumference of the first guide hole 51 and the outer circumference of the first pin 41.

Two or more of the first guide plates 50 may be placed at intervals in the longitudinal direction of the first pin 41, and three or more of the first guide plates 50 may be placed. In the embodiment, two first guide plates 50 are placed. When the two first guide holes 51 through which a single first pin 41 is inserted are slightly misaligned in the direction perpendicular to the longitudinal direction of the first pin 41, the first pin 41 is slightly tilted, so that the increase in the sliding resistance of the first pin 41 can be suppressed.

If three or more of the first guide plates 50 are placed at intervals in the longitudinal direction of the first pin 41, when the three first guide holes 51 through which a single first pin 41 is inserted are misaligned with each other in the direction perpendicular to the longitudinal direction of the first pin 41, the first pin 41 is bent and deformed. Therefore, the sliding resistance of the first pin 41 is greatly increased.

The bending apparatus 20 includes a first movable plate 70 on which a first mold 15 is installed. The first movable plate 70 is disposed below the first guide plate 50 which guides the first pin group 40 in order to raise the first pin group 40 at a first curved surface 16 of the first mold 15. Thus, the first movable plate 70 is disposed on the side opposite to the glass plate 10 with respect to the first guide plate 50. For example, the first movable plate 70 is disposed below the first guide plate 50. The first mold 15 is installed on the top surface of the first movable plate 70 with the first curved surface 16 facing up.

For example, in the first curved surface 16 of the first mold 15, a cross-sectional shape perpendicular to the Y-axis direction is a curved shape and a cross-sectional shape perpendicular to the X-axis direction is a linear shape. The shape of the first curved surface 16 of the first mold 15 is not particularly limited. For example, in the first curved surface 16 of the first mold 15, a cross-sectional shape perpendicular to the Y-axis direction may be a curved shape and a cross-sectional shape perpendicular to the X-axis direction is a curved shape.

The first movable plate 70 has a plurality of first through holes 71 that penetrate the first movable plate 70 in the longitudinal direction of the first pins 41. A first guide rod 72 is inserted one by one into each of the plurality of first through holes 71. The first guide rod 72 is fixed to the lower first guide plate 50 and extends downwardly from the bottom surface of the lower first guide plate 50. The first movable plate 70 moves along with the first guide rod 72 below the lower first guide plate 50.

The bending apparatus 20 includes a first moving mechanism 80 for moving the first movable plate 70 relative to the first guide plate 50 in the longitudinal direction of the first pins 41. The first moving mechanism 80 includes, for example, a servomotor and a ball screw that converts the rotational motion of the servomotor to linear motion of the first movable plate 70. The first moving mechanism 80 may be configured by a hydraulic cylinder or the like, and the configuration of the first moving mechanism 80 is not particularly limited.

The bending apparatus 20 includes a control device 90. For example, the control device 90 is configured by a computer, and the control device 90 includes a central processing unit (CPU) 91 and a storage medium 92, such as a memory. The storage medium 92 includes programs for controlling various steps performed in the bending apparatus 20.

The control device 90 controls the operation of the bending apparatus 20 by letting the CPU 91 to execute programs stored in the storage medium 92. The control device 90 also receives signals from the outside at an input interface 93 and transmits signals to the outside at an output interface 94.

The control device 90 is connected to a position detector which detects the present position of the first movable plate 70. The control device 90 compares the present and target positions of the first movable plate 70 and controls the first moving mechanism 80 to match the present and target positions of the first movable plate 70.

For example, a rotary encoder for detecting the rotation of the servomotor of the first moving mechanism 80 is used as a position detector. A linear encoder can also be used in place of the rotary encoder. The linear encoder has a scale and a read head to read the scale. For example, the scale is installed along the first guide rod 72 and the read head is installed on the first movable plate 70.

The bending apparatus 20 includes a chamber 21 containing the heater 30, the first pin group 40, the first guide plate 50, the first insulation plate 60, the first movable plate 70, and the first moving mechanism 80. The first cooler 63 and the control device 90 are disposed outside of the chamber 21. The first cooler 63 may be disposed inside the chamber 21. The first moving mechanism 80 may also be disposed outside the chamber 21.

When a member formed by a carbon material is disposed inside the chamber 21, the inside of the chamber 21 is filled with an inert gas, such as nitrogen gas, to prevent the carbon from burning out. The inside of the chamber 21 may be depressurized by a vacuum pump to a pressure below atmospheric pressure.

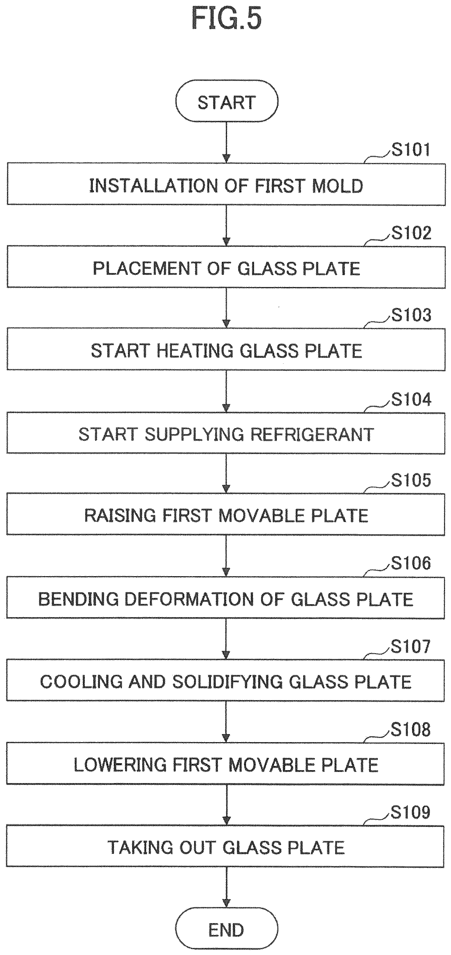

FIG. 5 is a flowchart illustrating a bending method according to the first embodiment. The order of the plurality of steps illustrated in FIG. 5 is not particularly limited. For example, the installation of the first mold 15 (Step S101) and the placement of the glass plate 10 (Step S102) may be performed in the reverse order or may be performed simultaneously. In addition, the start of heating the glass plate 10 (Step S103) and the start of supplying the refrigerant (Step S104) may be performed in the reverse order or may be performed simultaneously.

The bending method first includes Step S101 of installing the first mold 15 to the first movable plate 70. The first mold 15 is disposed between the first movable plate 70 and the first pin group 40 as illustrated in FIG. 1. The first mold 15 may be installed manually or may be installed automatically, such as by a robot.

A first flange 43 is formed on the outer peripheral surface of the first pin 41 in order to secure a workspace for installing the first mold 15 between the first movable plate 70 and the first pin group 40. The first flange 43 is formed, for example, in a circular shape. The outer diameter of the first flange 43 is larger than the inner diameter of the first guide hole 51, and the first flange 43 cannot pass through the first guide hole 51.

The first flange 43 is movable between the upper first guide plate 50 and the lower first guide plate 50. The first flange 43 abuts on the top surface of the lower first guide plate 50 to prevent the first pin 41 from spontaneously falling below a predetermined position. As a result, a workspace for installing the first mold 15 can be secured between the first pin group 40 and the first movable plate 70.

The bending method includes Step S102 of placing the glass plate 10 in a position where the glass plate 10 is heated. The glass plate 10 is held horizontally, for example, by the first pin group 40. At this time, the first flange 43 abuts on the top surface of the lower first guide plate 50. The glass plate 10 may be held horizontally by a retaining member other than the first pin group 40. The placement of the glass plate 10 may be performed manually or may be performed automatically, such as by a robot.

The bending method includes Step S103 of starting the heating of the glass plate 10. The heater 30 starts to heat the glass plate 10. The start of heating by a side heater 31 and the start of heating by a top heater 32 may be earlier for one of the two or may be simultaneous. For example, when the top heater 32 heats the glass plate 10 more rapidly than the side heater 31, the top heater 32 starts heating after the start of heating by the side heater 31 to prevent breakage of the glass plate 10.

The bending method includes Step S104 of supplying a refrigerant to the flow passage 52 inside the first guide plate 50. The first cooler 63 supplies the refrigerant to the flow passage 52 inside the first guide plate 50. The changes in the amount of the clearance between the inner peripheral surface of the first guide hole 51 and the outer peripheral surface of the first pin 41 can be suppressed, because the rise of temperature of the first guide plate 50 and the dimensional change of the inner peripheral surface of the first guide hole 51 can be suppressed.

The bending method includes Step S105 of raising a first movable plate 70 to bring the first movable plate 70 closer to the first guide plate 50. A first moving mechanism 80 raises the first movable plate 70 so that a first curved surface 16 of a first mold 15 contacts three or more of the first pins 41 in a predetermined order, and the three or more of the first pins 41 start rising in the predetermined order. As a result, the upper end portion of the first pin group 40 forms a three-dimensional curved surface having the same shape as the first curved surface 16 of the first mold 15.

In Step S105, instead of raising the first movable plate 70, the first movable plate 70 may be fixed and the first guide plate 50 may be lowered. By fixing the first movable plate 70 and lowering the first guide plate 50, the first pins 41 are lowered with the first guide plate 50. Thereafter, three or more of the first pins 41 contact the first curved surface 16 of the first mold 15 in the predetermined order and stop being lowered. The first pins 41 are raised relative to the first guide plate 50. As a result, the upper end portion of the first pin group 40 forms a three-dimensional curved surface having the same shape as the first curved surface 16 of the first mold 15.

The bending method includes Step S106 of bending deformation of the heated glass plate 10 along the first pin group 40. The bending deformation (Step S106) of the glass plate 10 may be started after the first movable plate 70 starts rising (Step S105). For example, the bending deformation may be started during the rise (Step S105) of the first movable plate 70.

The lower end portion of the three or more of the first pins 41 contacts the first curved surface 16 of the first mold 15, and the upper end portion of the three or more of the first pins 41 is positioned at the apex of the triangular polygon that constitutes the three-dimensional curved surface. The three-dimensional curved surface has the same shape as the first curved surface 16 of the first mold 15. The first main surface 11 of the glass plate 10 is pressed against the upper end portion of the first pin group 40 by gravity, thereby deforming in the same shape as the first curved surface 16 of the first mold 15.

The bending method includes Step S107 of cooling and solidifying the glass plate 10. The heater 30 may spontaneously cool the glass plate 10 by reducing the amount of heat (unit: W/s) of the glass plate 10 to zero, or the heater 30 may cool the glass plate 10 while gradually decreasing the amount of heat of the glass plate 10. The cooling rate of the glass plate 10 is set so that a sudden change in temperature does not cause breakage of the glass plate 10. The glass plate 10 is cooled and solidified in a state supported by the first pin group 40. Accordingly, the first main surface 11 of the glass plate 10 is cooled and solidified in the same shape as the first curved surface 16 of the first mold 15.

The bending method includes Step S108 of lowering the first movable plate 70 to separate the first movable plate 70 from the first guide plate 50. The lowering of the first movable plate 70 (Step S108) is started after the glass plate 10 has been cooled and solidified (Step S107).

When the first moving mechanism 80 lowers the first movable plate 70, the first mold 15 moves down with the first movable plate 70, and the first pins 41 move down by gravity. When the first flange 43 abuts the top surface of the lower first guide plate 50, the lowering of the first pins 41 stops. Subsequently, when the first mold 15 is further lowered with the first movable plate 70, the first curved surface 16 of the first mold 15 moves away from the first pins 41.

The bending method includes Step S109 of removing the glass plate 10. The removal of the glass plate 10 (Step S109) is started after the first movable plate 70 is lowered (Step S108). The glass plate 10 may be removed manually or may be removed automatically, such as by a robot. A mold releasing agent is preliminarily applied to the upper end portion of the first pins 41 in order to secure the releasing property of the glass plate 10 and the first pins 41.

As described above, the bending apparatus 20 of the present embodiment is capable of bending and forming molding the first main surface 11 of the glass plate 10 in the same shape as the first curved surface 16 of the first mold 15. The first mold 15 is not appreciably heated because the first mold 15 and the glass plate 10 are separated by the first pin group 40. Accordingly, as the first mold 15, a mold having low heat resistance can be used. A mold having low heat resistance can reduce mold fabrication costs and times compared to a mold having high heat resistance. This is because molding of materials with high heat resistance is easier than molding of materials with low heat resistance. The first mold 15 is produced, for example, by a 3D printer, and the material of the mold is, for example, a resin.

The bending apparatus 20 of the embodiment includes the first moving mechanism 80 for moving the first movable plate 70 on which the first mold 15 is installed relative to the first guide plate 50. When the first moving mechanism 80 raises the first movable plate 70, for example, the first curved surface 16 of the first mold 15 contacts three or more of the first pins 41 in a predetermined order, and the three or more of the first pins 41 start to rise in the predetermined order. As a result, the lower end portion of the three or more of the first pins 41 contacts the first curved surface 16 of the first mold 15, and the upper end portion of the three or more of the first pins 41 is positioned at the apex of the triangular polygon that constitutes the three-dimensional curved surface. The three-dimensional curved surface has the same shape as the first curved surface 16 of the first mold 15. The first main surface 11 of the glass plate 10 is pressed against the upper end portion of the first pin group 40 by gravity, thereby deforming in the same shape as the first curved surface 16 of the first mold 15. The first moving mechanism 80 can move three or more of the first pins 41 with fewer driving sources than the number of first pins 41 because the first moving mechanism 80 moves three or more of the first pins 41 by moving the first movable plate 70.

In the embodiment, the number of the first mold 15 is one, but the plurality of molds may be used. A single assembly is constituted in a plurality of first molds 15, and the assembly is installed to a single first movable plate 70. The mold fabrication costs and times can be reduced because the assembly is fabricated by dividing it into multiple first molds 15.

In addition, even when the surface of the first curved surface 16 of the first mold 15 has defects such as fine stripes or irregularities, the defects are not directly transferred to the first main surface 11 of the glass plate 10. In addition, even when a single assembly is formed by a plurality of first molds 15, the shape of the connecting portions of the first molds 15 is not directly transferred to the first main surface 11 of the glass plate 10.

### [Second Embodiment]

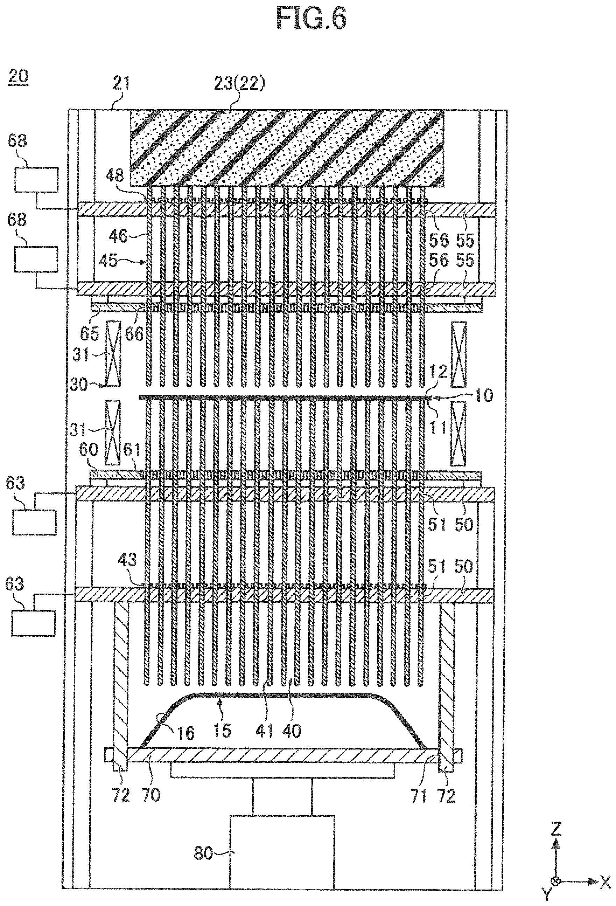

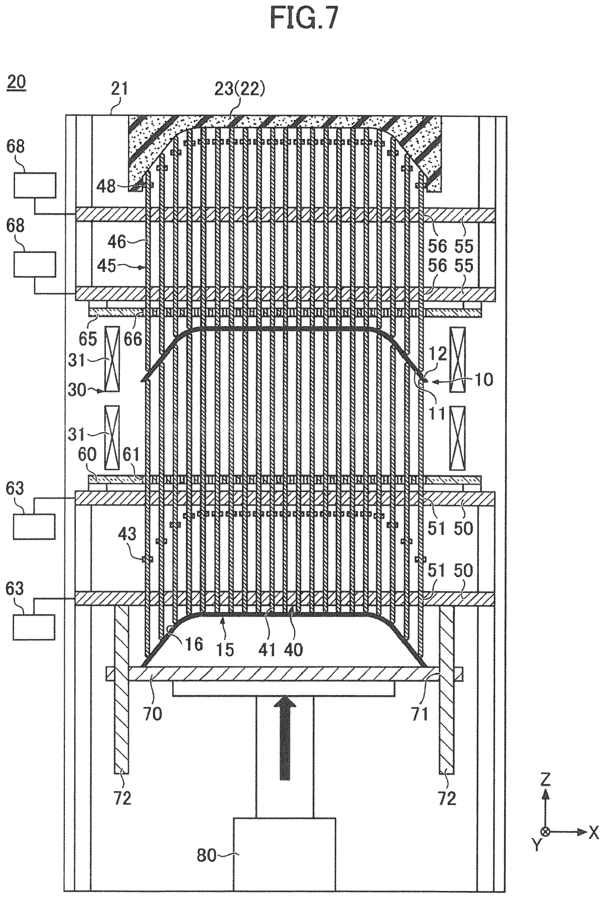

FIG. 6 is a diagram illustrating a bending apparatus of a second embodiment. FIG. 7 is a diagram illustrating an example of a state of the first movable plate illustrated in FIG. 6 at the time of completion of a rise of the first movable plate. The bending apparatus 20 includes a heater 30, a first pin group 40, a first guide plate 50, a first insulation plate 60, a first cooler 63, a first movable plate 70, and a first moving mechanism 80. The bending apparatus 20 also includes a second pin group 45, a second guide plate 55, a second insulation plate 65, a second cooler 68, and a repulsion generating unit 22. In addition, the bending apparatus 20 includes a control device 90 (see FIG. 1). Hereinafter, the differences between the present embodiment and the first embodiment will be mainly described.

The second pin group 45 includes three or more of the second pins 46 that contact the second main surface 12 of the glass plate 10. The second main surface 12 of the glass plate 10 is, for example, the top surface of the glass plate 10. The second pin group 45 is arranged above the glass plate 10. Each of the plurality of the second pins 46 constituting the second pin group 45 is arranged in parallel to the Z-axis direction. The longitudinal direction of the second pins 46 is, for example, in the Z-axis direction.

The second pins 46 may be formed of stainless steel, heat resistant steel, cemented carbide (e.g., tungsten carbide), ceramic (e.g., silicon carbide, silicon nitride, quartz), or carbon. The second pins 46 may have a coating film at least in part. The coating film may be any of a metal film, a ceramic film, a carbon film, and the like.

The lower end portion of the second pins 46 contacts the second main surface 12 of the glass plate 10. The shape of the lower end portion of the second pins 46 is not particularly limited. For example, a convex hemispherical shape may be used. The point contact between the second pins 46 and the glass plate 10 allows the glass plate 10 to bend smoothly.

The shape of the lower end portion of the second pins 46 may be cylindrical, conical, prismatic, or the like. Examples of prismatic shapes include triangular columnar, square columnar, hexagonal columnar, and the like. When the lower end portion of the second pins 46 is triangular columnar, square columnar, or hexagonal columnar, the lower end portion of the second pins 46 can be arranged without gaps, and the lower end portion of the second pins 46 can be closely arranged.

The upper end portion of the second pins 46 contacts the repulsion generating unit 22. The shape of the lower end portion of the second pins 46 is not particularly limited. For example, a convex hemispherical shape may be used.

The shape of the upper end portion of the second pins 46 may be cylindrical, conical, prismatic, or the like. Examples of prismatic shapes include triangular columnar, square columnar, hexagonal columnar, and the like. When the upper end portion of the second pins 46 is triangular columnar, square columnar, or hexagonal columnar, the upper end portion of the second pins 46 can be arranged without gaps, and the upper end portion of the second pins 46 can be closely arranged. The shape of the upper end portion of the second pins 46 and the shape of the lower end portion of the second pins 46 may be the same shape or different shapes.

The shape of an intermediate portion of the second pin 46 is not particularly limited. The shape is, for example, cylindrical. The intermediate portion of the second pin 46 is inserted through the second guide hole 56 of the second guide plate 55 and spaced apart from the intermediate portion of another second pin 46 by the second guide hole 56. Compared with the case where the intermediate portions of the adjacent second pins 46 are arranged without any gaps, the heat capacity of the second pin group 45 can be reduced, thereby improving the heat radiation performance.

The second pins 46 are arranged in the same manner as of the first pins 41. The second pins 46 are arranged, for example, on extensions of the first pins 41. The extensions of the first pins 41 are virtual lines extending the first pins 41 in a longitudinal direction of the first pins 41. In this case, the number of pins 46 is equal to the number of pins 41. It should be noted that the second pins 46 may be arranged off the extensions of the first pins 41.

The second guide plate 55 supports three or more of the second pins 46 parallel to each other and independently movably supports three or more of the second pins 46 in the longitudinal direction (e.g., in the Z-axis direction). The second guide plate 55 has three or more of the second guide holes 56 that penetrate the second guide plate 55 in the longitudinal direction of the second pins 46. A single second pin 46 is inserted through each of three or more of the second guide holes 56. Accordingly, the second guide holes 56 are arranged in the same manner as the second pins 46.

The second guide plate 55 is formed of, for example, carbon, to reduce a sliding resistance to the second pins 46. The second guide plate 55 of the embodiment is formed by carbon, but the materials of the second guide plate 55 is not limited to carbon. For example, when a refrigerant is supplied to a flow passage inside the second guide plate 55, as will be described in detail below, the material of the second guide plate 55 may be a metal having a high thermal conductivity to increase the cooling efficiency.

A cross-sectional shape of the second guide hole 56 and a cross-sectional shape of the second pin 46 are not particularly limited as long as they are similar. For example, the cross-sectional shapes are circular. The inner diameter of the second guide hole 56 is formed to be slightly larger than the outer diameter of the second pin 46 for the purpose of sliding the second pin 46. The clearance between the inner peripheral surface of the second guide hole 56 and the outer peripheral surface of the second pin 46 is set based on an acceptable tilt of the second pin 46 and the sliding resistance of the second pin 46.

The smaller the clearance between the inner peripheral surface of the second guide hole 56 and the outer peripheral surface of the second pin 46, the smaller the rattling of the second pin 46 and the maximum tilt of the second pin 46. However, the sliding resistance of the second pin 46 becomes larger. The tilt of the second pin 46 is the tilt of the centerline of the second pin 46 from a predetermined line (e.g., a line extending in the Z-axis direction).

A second insulation plate 65 is placed between the heater 30 and the second guide plate 55 for limiting the heat transfer from the heater 30 to the second guide plate 55. The changes in the amount of the clearance between the inner peripheral surface of the second guide hole 56 and the outer peripheral surface of the second pin 46 can be suppressed, because the rise of temperature of the second guide plate 55 and the dimensional change of the inner peripheral surface of the second guide hole 56 can be suppressed.

The second insulation plate 65 may absorb heat rays or may reflect heat rays in order to inhibit the transmission of heat rays, such as infrared rays. Examples of insulation materials that absorb heat rays include carbon. Further, for example, a metal oxide is used as an insulation material that reflects heat rays. The metal oxide may be deposited, for example, by a sputtering method on a matrix of metal material.

The second insulation plate 65 has three or more of the second through holes 66 that penetrate the second insulation plate 65 in the longitudinal direction of the second pins 46. Each of three or more of the second through holes 66 is inserted one by one with a second pin 46. Accordingly, the second through holes 66 are arranged in the same manner as the second pins 46. The second through holes 66 do not contact the second pins 46 unlike the second guide holes 56 so as not to interfere with the sliding of the second pins 46. The inner diameter of the second through hole 66 is larger than the inner diameter of the second guide hole 56.

The second guide plate 55 has a flow passage therein, and the bending apparatus 20 includes a second cooler 68 for supplying a refrigerant to the flow passage in the second guide plate 55. The changes in the amount of the clearance between the inner peripheral surface of the second guide hole 56 and the outer peripheral surface of the second pin 46 can be suppressed, because the rise of temperature of the second guide plate 55 and the dimensional change of the inner peripheral surface of the second guide hole 56 can be suppressed. The flow passage inside the second guide plate 55 is formed in the same manner as the flow passage 52 inside the first guide plate 50.

The maximum tilt of the second pin 46 is determined not only by the amount of clearance between the inner peripheral surface of the second guide hole 56 and the outer peripheral surface of the second pin 46, but also by the longitudinal dimension of the second guide hole 56. The larger the longitudinal dimension of the second guide hole 56, the smaller the maximum tilt of the second pin 46, but the larger the sliding resistance of the second pin 46. The sliding resistance of the second pin 46 increases because the contact area between the outer peripheral surface of the second pin 46 and the inner peripheral surface of the second guide hole 56 is large.

Therefore, two second guide plates 55 are placed at intervals in the longitudinal direction of the second pins 46, as illustrated in FIGS. 6 and 7. A single second pin 46 is inserted through two second guide holes 56 that are placed at intervals in the longitudinal direction of the second pin 46. By spacing the two second guide holes 56 through which the single second pin 46 is inserted, the maximum tilt of the second pin 46 can be reduced while suppressing the increase in the contact area between the inner circumference of the second guide hole 56 and the outer circumference of the second pin 46.

Two or more second guide plates 55 may be placed at intervals in the longitudinal direction of the second pin 46, and three or more of the second guide plates 50 may be placed. In the embodiment, two second guide plates 55 are placed. When the two second guide holes 56 through which a single second pin 46 is inserted are slightly misaligned in the direction perpendicular to the longitudinal direction of the second pin 46, the second pin 46 is slightly tilted, so that the increase in the sliding resistance of the second pin 46 can be suppressed.

If three or more of second guide plates 55 were placed at intervals in the longitudinal direction of the second pin 46, when the three second guide holes 56 through which a single second pin 46 is inserted are misaligned with each other in the direction perpendicular to the longitudinal direction of the second pin 46, the second pin 46 would be bent and deformed. Therefore, the sliding resistance of the second pin 46 would greatly increase.

The repulsion generating unit 22 is deformed in accordance with the movement of three or more of the second pins 46, thereby imparting a repulsive force in a direction opposite to the direction of movement of the second pins 46. For example, the repulsion generating unit 22 imparts a downward repulsion force to the second pins 46 by deforming the repulsion generating unit 22 in accordance with the rise of the second pins 46. The repulsion generating unit 22 is disposed, for example, above the second guide plate 55 which guides the second pin group 45.

The repulsion generating unit 22 includes, for example, a highly elastic foam 23. The highly elastic foam 23 is also referred to as a high repulsion foam. The highly elastic foam 23 is made by dispersing gas in a resin and foaming the resin, and has a repulsive elasticity of 50% or more. The repulsive elasticity is the ratio of the height after an object rebounds to the height of the object at time of falling, when the object is collided with a test specimen. As a resin, for example, urethane is used. In addition to the highly elastic foam 23, a spring, an airbag, or the like, which will be described later, is used as a repulsion generating unit 22.

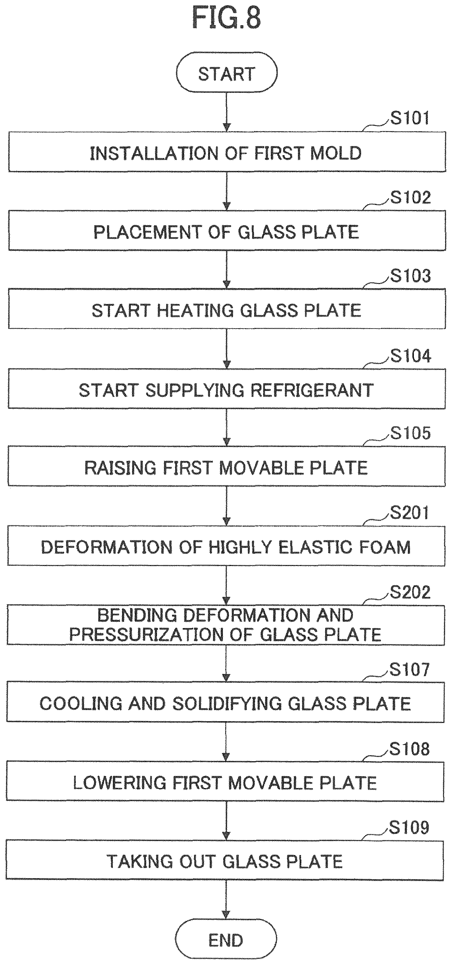

FIG. 8 is a flowchart illustrating a bending method according to the second embodiment. The order of the plurality of steps illustrated in FIG. 8 is not particularly limited. For example, the installation of the first mold 15 (Step S101) and the placement of the glass plate 10 (Step S102) may be performed in the reverse order or may be performed simultaneously. In addition, the start of heating the glass plate 10 (Step S103) and the start of supplying the refrigerant (Step S104) may be performed in the reverse order or may be performed simultaneously.

The bending method includes Step S102 of placing the glass plate 10 in a position where the glass plate 10 is heated. The glass plate 10 is held horizontally, for example, by the first pin group 40. The placement of the glass plate 10 may be performed manually or may be performed automatically, such as by a robot.

A second flange 48 is formed on the outer peripheral surface of the second pins 46 in order to secure a space for placing the glass plate 10 between the first pin group 40 and the second pin group 45. The second flange 48 is formed, for example, in a circular shape. The outer diameter of the second flange 48 is larger than the inner diameter of the second guide hole 56, and the second flange 48 cannot pass through the second guide hole 56.

The second flange 48 is movable at above the upper second guide plate 55. The second flange 48 abuts on the top surface of the upper second guide plate 55 to prevent the second pins 46 from spontaneously falling below a predetermined position. As a result, a workspace for placing the glass plate 10 between the second pin group 45 and the first pin group 40 can be secured.

The second flange 48 is movable above the upper second guide plate 55 in the embodiment. The second flange 48 may be movable between the upper second guide plate 55 and the lower second guide plate 55 in the same manner as the first flange 43.

The bending method includes Step S104 of supplying the refrigerant to the flow passages 52 inside the first guide plate 50 and second guide plate 55. The first cooler 63 supplies the refrigerant to the flow passage 52 inside the first guide plate 50. The changes in the amount of the clearance between the inner peripheral surface of the first guide hole 51 and the outer peripheral surface of the first pin 41 can be suppressed, because the rise of temperature of the first guide plate 50 and the dimensional change of the inner peripheral surface of the first guide hole 51 can be suppressed.

The second cooler 68 also supplies the refrigerant to the flow passage inside the second guide plate 55. The changes in the amount of the clearance between the inner peripheral surface of the second guide hole 56 and the outer peripheral surface of the second pin 46 can be suppressed, because the rise of temperature of the second guide plate 55 and the dimensional change of the inner peripheral surface of the second guide hole 56 can be suppressed.

The bending method includes Step S105 of raising the first movable plate 70 to bring the first movable plate 70 closer to the first guide plate 50 and the second guide plate 55.

The bending method includes Step S201 of deforming the highly elastic foam 23 by bringing the first movable plate 70 closer to the second guide plate 55. The Step S201 may be started after the first movable plate 70 starts to rise (Step S105). For example, the Step S201 may be started during the step of raising the first movable plate 70 (Step S105).

The first moving mechanism 80 raises the first movable plate 70, thereby the first pin group 40 pushes the glass plate 10 up from below. The second main surface 12 of the glass plate 10 contacts three or more of the second pins 46 in a predetermined order, and the three or more of the second pins 46 start to rise in the predetermined order. The highly elastic foam 23 is deformed in order to allow the rising of the second pins 46. The highly elastic foam 23 is deformed to produce a repulsive force. This repulsive force pushes the second pins 46 downwardly.

In Step S105, instead of raising the first movable plate 70, the first movable plate 70 may be fixed and the first guide plate 50 may be lowered. In this case, in Step S201, the second guide plate 55, the second insulation plate 65, and the highly elastic foam 23 are lowered. As the second guide plate 55 is lowered, the second pins 46 are also lowered with the second guide plate 55. Thereafter, three or more of the second pins 46 contact the second main surface 12 of the glass plate 10 in the predetermined order and stop being lowered. The second pins 46 are raised relative to the second guide plate 55. The highly elastic foam 23 is deformed in order to allow the rising of the second pin 46 with respect to the second guide plate 55. The highly elastic foam 23 is deformed to produce the repulsive force. This repulsive force pushes the second pins 46 downwardly.

The bending method includes Step S202 of bending and deforming the heated glass plate 10 along the first pin group 40 and the second pin group 45 and of pressing the heated glass plate 10 between the first pin group 40 and the second pin group 45. The Step S202 may be started after the first movable plate 70 starts to rise (Step S105). For example, the Step S202 may be started during the step of raising the first movable plate 70 (Step S105).

The lower end portion of the three or more of the first pins 41 contacts the first curved surface 16 of the first mold 15, and the upper end portion of the three or more of the first pins 41 is positioned at the apex of the triangular polygon that constitutes the three-dimensional curved surface. The three-dimensional curved surface has the same shape as the first curved surface 16 of the first mold 15. The first main surface 11 of the glass plate 10 is pressed against the upper end portion of the first pin group 40 by gravity, thereby deforming in the same shape as the first curved surface 16 of the first mold 15.

In contrast, the lower end portion of three or more of the second pins 46 contacts the second main surface 12 of the glass plate 10, and the upper end portion of three or more of the second pins 46 contacts the highly elastic foam 23. The highly elastic foam 23 is deformed in order to allow for the movement of the second pins 46 and pushes the second pins 46 back downwardly by a repelling force. As a result, the lower end portion of the second pins 46 presses the glass plate 10 against the upper end portion of the first pin group 40. Not only the gravity but also the repulsive force can be used to deform the glass plate 10, thus allowing the glass plate 10 to be reliably bent and deformed.

The bending method includes Step S108 of lowering the first movable plate 70 to separate the first movable plate 70 from the first guide plate 50 and the second guide plate 55. The lowering of the first movable plate 70 (Step S108) starts after the glass plate 10 has been cooled and solidified (Step S107).

When the first moving mechanism 80 lowers the first movable plate 70, the first mold 15 is lowered with the first movable plate 70. As a result, the first pins 41 are lowered to their original position by gravity, while the second pins 46 are lowered to their original position by the repulsive force and gravity of the repulsion generating unit 22, and the repulsion generating unit 22 returns to its original shape.

### [First Modified Example of the Second Embodiment]

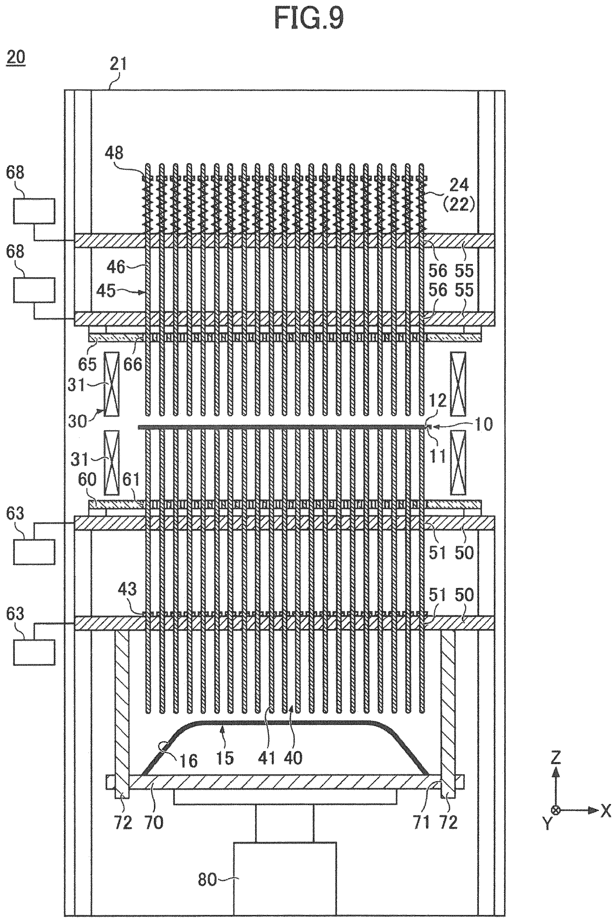

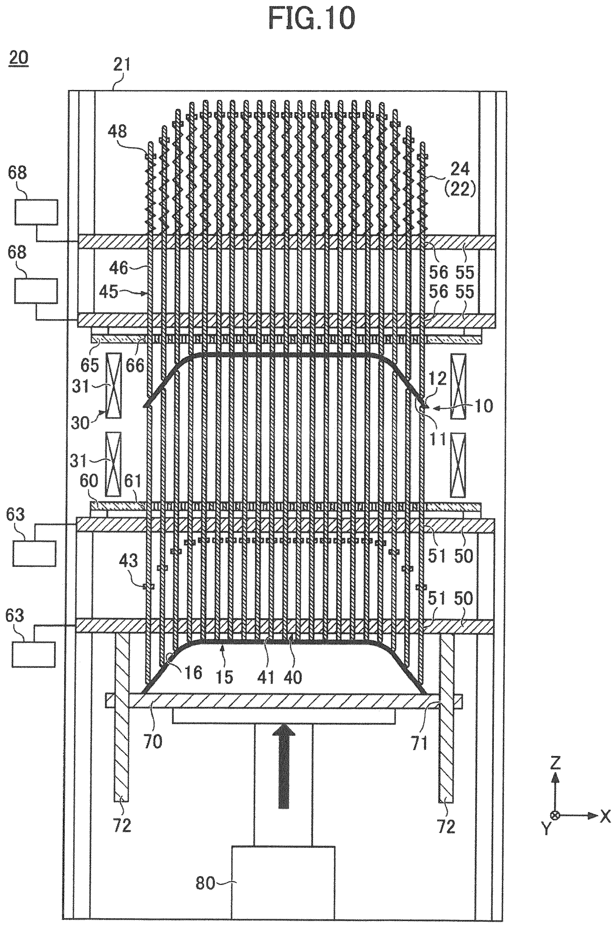

FIG. 9 is a diagram illustrating a bending apparatus of a first modified example of the second embodiment. FIG. 10 is a diagram illustrating an example of a state of the first movable plate illustrated in FIG. 9 at the time of completion of a rise of the first movable plate. The bending apparatus 20 includes a heater 30, a first pin group 40, a first guide plate 50, a first insulation plate 60, a first cooler 63, a first movable plate 70, and a first moving mechanism 80. The bending apparatus 20 also includes a second pin group 45, a second guide plate 55, a second insulation plate 65, a second cooler 68, and a repulsion generating unit 22. In addition, the bending apparatus 20 includes a control device 90 (see FIG. 1). Hereinafter, the differences between the present modified example and the second embodiment will be mainly described.

The repulsion generating unit 22 includes, for example, three or more of the springs 24. The springs 24 are disposed in each of the second pins 46 and are deformed in accordance with the movement of the second pins 46 to impart a repulsive force to the second pins 46 in a direction opposite to the direction of the movement of the second pins 46.

The spring 24 is, for example, a coil spring through which the second pin 46 is inserted. The coil spring is disposed between the second flange 48 formed on the outer peripheral surface of the second pin 46 and the upper second guide plate 55. When the second flange 48 is displaced upwardly, the coil spring extends and the elastic restoring force pushes the second pin 46 downwardly.

The arrangement of the springs 24 is not limited to the arrangement illustrated in FIG. 9 or the like. For example, the springs 24 may be disposed between the second flanges 48 formed on the outer peripheral surfaces of the second pins 46 and a ceiling wall of a chamber 21. In this case, when the second flanges 48 are displaced upwardly, the coil springs shrink and the elastic restoring forces push the second pins 46 downwardly.

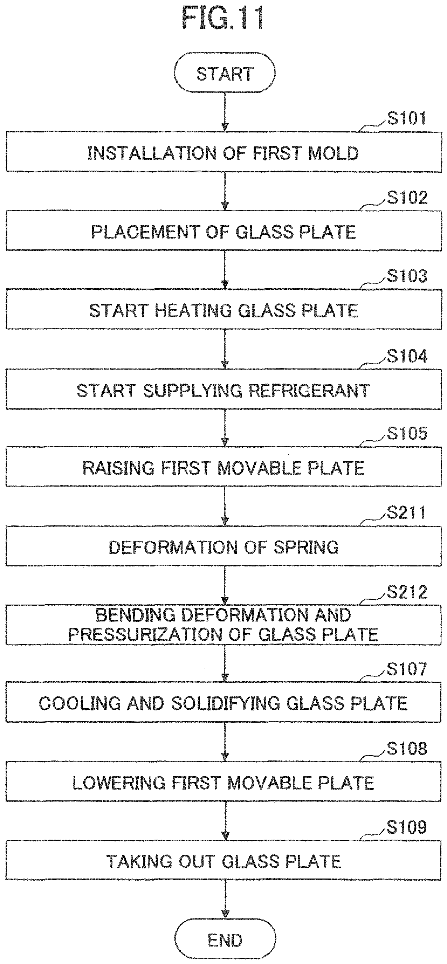

FIG. 11 is a flowchart illustrating a bending method according to the first modified example of the second embodiment. The order of the plurality of steps illustrated in FIG. 11 is not particularly limited. For example, the installation of the first mold 15 (Step S101) and the placement of the glass plate 10 (Step S102) may be performed in the reverse order or may be performed simultaneously. In addition, the start of heating the glass plate 10 (Step S103) and the start of supplying the refrigerant (Step S104) may be performed in the reverse order or may be performed simultaneously.

The bending method includes Step S211 of deforming the springs 24 by bringing the first movable plate 70 closer to the second guide plate 55. The Step S211 may be started after the first movable plate 70 starts rising (Step S105). For example, the Step S211 may be started during the step of raising the first movable plate 70 (Step S105) .

The first moving mechanism 80 raises the first movable plate 70, thereby the first pin group 40 pushes the glass plate 10 up from below. The second main surface 12 of the glass plate 10 contacts three or more of the second pins 46 in a predetermined order, and the three or more of the second pins 46 start to rise in the predetermined order. The springs 24 are deformed in order to allow the rising of the second pins 46. The springs 24 are deformed to produce repulsive force. The repulsive forces push the second pins 46 downwardly.

In Step S105, instead of raising the first movable plate 70, the first movable plate 70 may be fixed and the first guide plate 50 may be lowered. In this case, in Step S211, the second guide plate 55, the second insulation plate 65, and the highly elastic foam 23 are lowered. As the second guide plate 55 is lowered, the second pins 46 are also lowered with the second guide plate 55. Thereafter, three or more of the second pins 46 contact the second main surface 12 of the glass plate 10 in the predetermined order and stop being lowered. The second pins 46 are raised relative to the second guide plate 55. The springs 24 are deformed in order to allow the rising of the second pins 46 with respect to the second guide plate 55. The springs 24 are deformed to produce repulsive forces. The repulsive forces push the second pins 46 downwardly.

The bending method includes Step S212 of bending and deforming the heated glass plate 10 along the first pin group 40 and the second pin group 45 and of pressing the heated glass plate 10 between the first pin group 40 and the second pin group 45. The Step S212 may be started after the first movable plate 70 starts to rise (Step S105). For example, the Step S212 may be started during the step of raising the first movable plate 70 (Step S105).

The lower end portion of the three or more of the first pins 41 contacts the first curved surface 16 of the first mold 15, and the upper end portion of the three or more of the first pins 41 is positioned at the apex of the triangular polygon that constitutes the three-dimensional curved surface. The three-dimensional curved surface has the same shape as the first curved surface 16 of the first mold 15. The first main surface 11 of the glass plate 10 is pressed against the upper end portion of the first pin group 40 by gravity, thereby deforming in the same shape as the first curved surface 16 of the first mold 15.

In contrast, the lower end portion of three or more of the second pins 46 contacts the second main surface 12 of the glass plate 10 and is deformed upwardly. The springs 24 are deformed in order to allow for the movement of the second pins 46 and push the second pins 46 back downwardly by a repelling force. As a result, the lower end portion of the second pins 46 presses the glass plate 10 against the upper end portion of the first pin group 40. Not only the gravity but also the repulsive force can be used to deform the glass plate 10, thus allowing the glass plate 10 to be reliably bent and deformed.

In the second embodiment, the highly elastic foam 23 alone is used as the repulsion generating unit 22. In the first modified example, the springs 24 alone are used as the repulsion generating unit 22. However, the highly elastic foam 23 and the springs 24 may be used in combination.

### [Second Modified Example of the Second Embodiment]

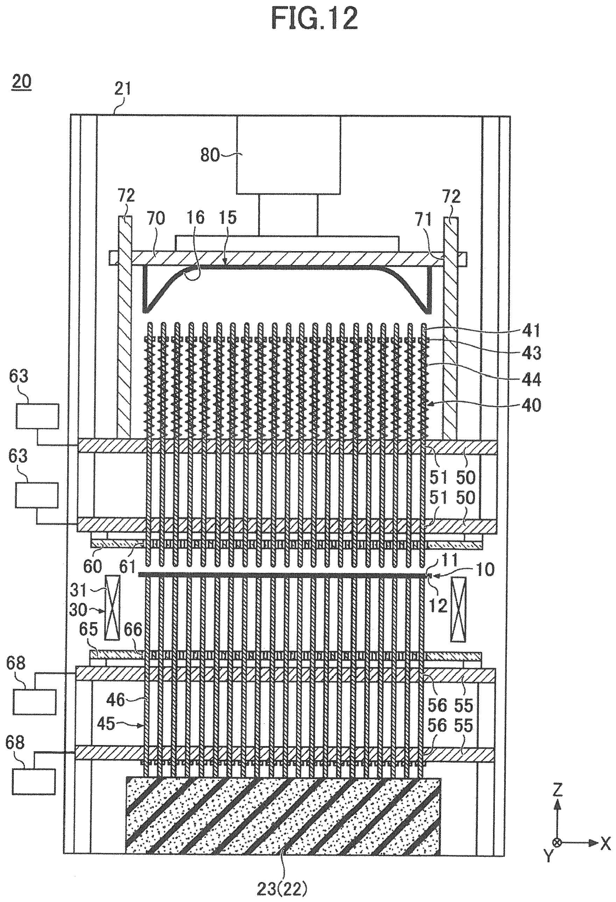

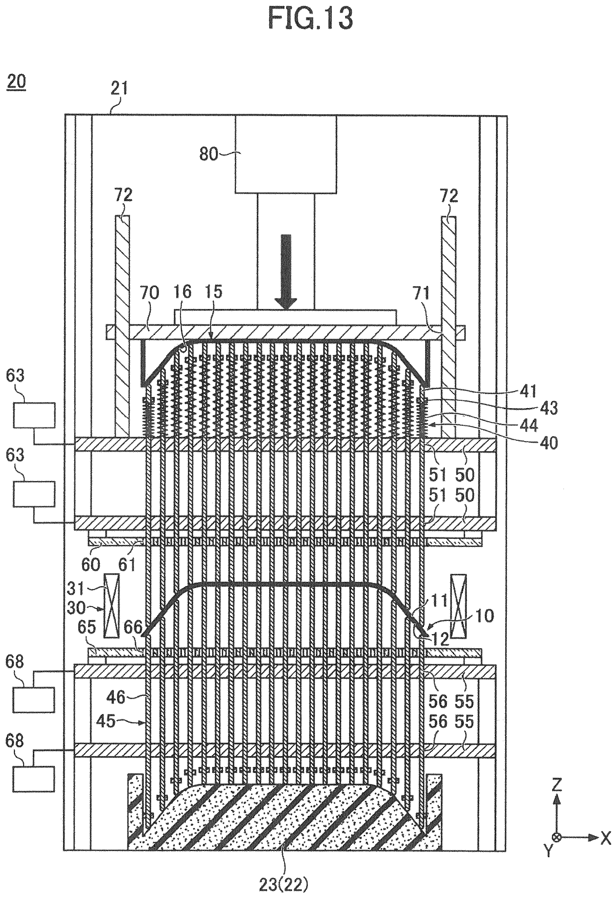

FIG. 12 is a diagram illustrating a bending apparatus of a second modified example of the second embodiment. FIG. 13 is a diagram illustrating an example of a state of the first movable plate illustrated in FIG. 12 at the time of completion of a rise of the first movable plate. The bending apparatus 20 includes a heater 30, a first pin group 40, a first guide plate 50, a first insulation plate 60, a first cooler 63, a first movable plate 70, and a first moving mechanism 80. The bending apparatus 20 also includes a second pin group 45, a second guide plate 55, a second insulation plate 65, a second cooler 68, and a repulsion generating unit 22. In addition, the bending apparatus 20 includes a control device 90 (see FIG. 1). Hereinafter, the differences between the present modified example and the second embodiment will be mainly described.

The bending apparatus 20 of the present modified example includes a first pin group 40, a first guide plate 50, a first insulation plate 60, and a first movable plate 70 above the glass plate 10. A first main surface 11 of the glass plate 10 is not the bottom surface of the glass plate 10, but the top surface of the glass plate 10. The lower end portion of the first pins 41 contacts the first main surface 11 of the glass plate 10 and the upper end portion of the first pins 41 contacts the first curved surface 16 of the first mold 15.

The first movable plate 70 is disposed above the first guide plate 50 which guides the first pin group 40 in order to lower the first pin group 40 at the first curved surface 16 of the first mold 15. Thus, the first movable plate 70 is disposed on an opposite side to the glass plate 10 with respect to the first guide plate 50. For example, the first movable plate 70 is disposed above the first guide plate 50. The first mold 15 is installed on the bottom surface of the first movable plate 70 with the first curved surface 16 facing down.

Further, the bending apparatus 20 of the present modified example includes a second pin group 45, a second guide plate 55, a second insulation plate 65, a repulsion generating unit 22, and the like below the glass plate 10. The second main surface 12 of the glass plate 10 is not the top surface of the glass plate 10, but the bottom surface of the glass plate 10. The upper end portion of the second pins 46 contacts the second main surface 12 of the glass plate 10 and the lower end portion of the second pins 46 contacts the repulsion generating unit 22.

The repulsion generating unit 22 is deformed in accordance with the movement of three or more of the second pins 46, thereby imparting a repulsive force in a direction opposite to the direction of the movement of the second pins 46. For example, the repulsion generating unit 22 imparts an upward repulsive force to the second pins 46 by deforming in accordance with the lowering of the second pin 46. The repulsion generating unit 22 is disposed, for example, below the second guide plate 55 which guides the second pin group 45.

The repulsion generating unit 22 includes, for example, a highly elastic foam 23. The repulsion generating unit 22 may include three or more of the springs 24 as in the first modified example and may include both the highly elastic foam 23 and the springs 24.

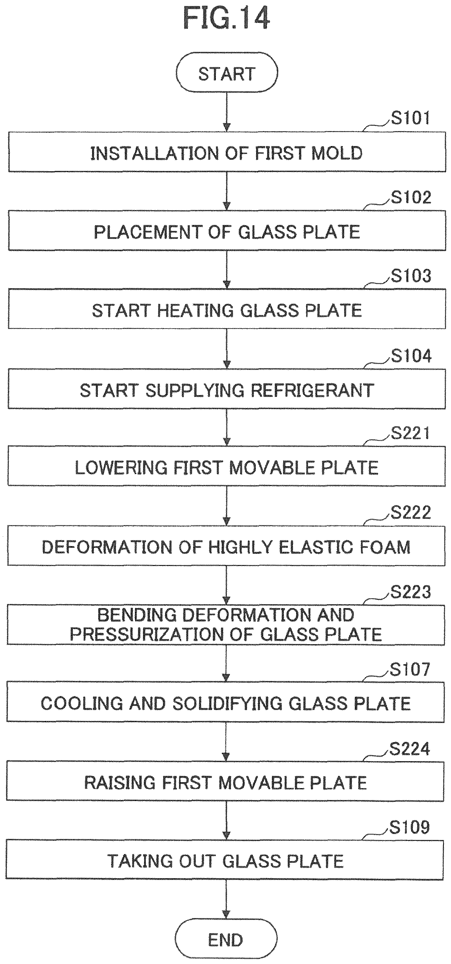

FIG. 14 is a flowchart illustrating a bending method according to the second modified example of the second embodiment. The order of the plurality of steps illustrated in FIG. 14 is not particularly limited. For example, the installation of the first mold 15 (Step S101) and the placement of the glass plate 10 (Step S102) may be performed in the reverse order or may be performed simultaneously. In addition, the start of heating the glass plate 10 (Step S103) and the start of supplying the refrigerant (Step S104) may be performed in the reverse order or may be performed simultaneously.

The bending method includes Step S102 of placing the glass plate 10 in a position where the glass plate 10 is heated. The glass plate 10 is held horizontally, for example, by the second pin group 45. The placement of the glass plate 10 may be performed manually or may be performed automatically, such as by a robot.

A first flange 43 is formed on the outer peripheral surface of the first pins 41 in order to secure a space for placing the glass plate 10 between the second pin group 45 and the first pin group 40. The first flange 43 is formed, for example, in a circular shape. The outer diameter of the first flange 43 is larger than the inner diameter of the first guide hole 51, and the first flange 43 cannot pass through the first guide hole 51.

A first spring 44 is disposed between the first flange 43 formed on the outer peripheral surface of the first pin 41 and the upper first guide plate 50. The first spring 44 is disposed on each of the first pins 41, is deformed in accordance with the movement of the first pins 41, and imparts a repulsive force to the first pins 41 in a direction opposite to the direction of the movement of the first pins 41.

The first spring 44 prevents the first pin 41 from spontaneously falling below a predetermined position due to its elastic restoring force. As a result, a space for placing the glass plate 10 can be provided between the first pin group 40 and the second pin group 45. The arrangement of the first springs 44 is not limited to the arrangement illustrated in FIG. 12 or the like.

The bending method includes Step S221 of lowering the first movable plate 70 to bring the first movable plate 70 closer to the first guide plate 50 and the second guide plate 55. The first moving mechanism 80 raises the first movable plate 70 so that the first curved surface 16 of the first mold 15 contacts three or more of the first pins 41 in a predetermined order, and the three or more of the first pins 41 start lowering in a predetermined order. As a result, the lower end portion of the first pin group 40 forms a three-dimensional curved surface having the same shape as the first curved surface 16 of the first mold 15.

The bending method includes Step S222 of deforming the highly elastic foam 23 by bringing the first movable plate 70 closer to the second guide plate 55. The Step S222 may be started after the first movable plate 70 starts lowering (Step S221). For example, the Step S221 may be started during the step of lowering the first movable plate 70 (Step S221).

The first moving mechanism 80 lowers the first movable plate 70, thereby the first pin group 40 pushes the glass plate 10 down from above. The glass plate 10 pushes down three or more of the second pins 46 in a predetermined order, and the second pins 46 start lowering in the predetermined order. The highly elastic foam 23 is deformed in order to allow the lowering of the second pins 46. The highly elastic foam 23 is deformed to produce a repulsive force. The repulsive force pushes the second pins 46 upwardly.

The bending method includes Step S223 of bending and deforming the heated glass plate 10 along the first pin group 40 and the second pin group 45 and of pressing the heated glass plate 10 between the first pin group 40 and the second pin group 45. The step S223 may be started after the first movable plate 70 starts to lower (Step S221). For example, the step S221 may be started during the step of lowering the first movable plate 70 (Step S221).

The upper end portion of the three or more of the first pins 41 contacts the first curved surface 16 of the first mold 15, and the lower end portion of the three or more of the first pins 41 is positioned at the apex of the triangular polygon that constitutes the three-dimensional curved surface. The three-dimensional curved surface has the same shape as the first curved surface 16 of the first mold 15.

In contrast, the upper end portion of three or more of the second pins 46 contacts the first main surface 11 of the glass plate 10, and the lower end portion of three or more of the second pins 46 contacts the highly elastic foam 23. The highly elastic foam 23 is deformed in order to allow for the movement of the second pins 46 and pushes the second pins 46 back downwardly by a repelling force.

As a result, the lower end portion of the second pins 46 presses the glass plate 10 against the upper end portion of the first pin group 40. The first main surface 11 of the glass plate 10 is pressed against the upper end portion of the first pin group 40 by the repulsive force of the repulsion generating unit 22, thereby deforming in the same shape as the first curved surface 16 of the first mold 15.

According to the present modified example, the glass plate 10 can be reliably bent and deformed because the glass plate 10 is pressurized between the second pin group 45 and the first pin group 40.

The bending method includes Step S224 of raising the first movable plate 70 to separate the first movable plate 70 from the first guide plate 50 and the second guide plate 55. The raising of the first movable plate 70 (Step S224) starts after the glass plate 10 has been cooled and solidified (Step S107).

When the first moving mechanism 80 raises the first movable plate 70, the first mold 15 is raised with the first movable plate 70. As a result, the first pins 41 are raised to their original position by elastic restoration force, while the second pins 46 are raised to their original position by the repulsive force of the repulsion generating unit 22, and the repulsion generating unit 22 returns to its original shape.

### [Third Embodiment]

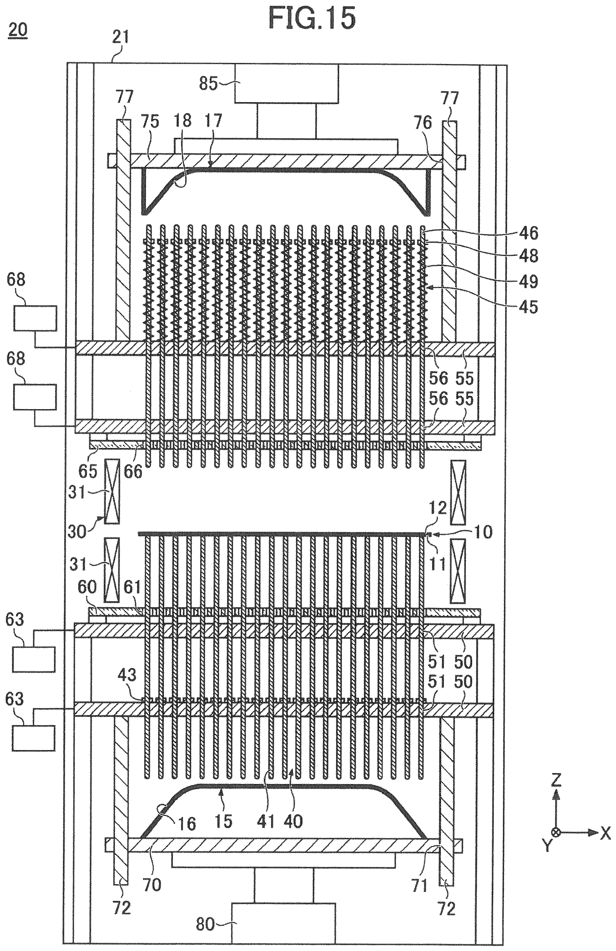

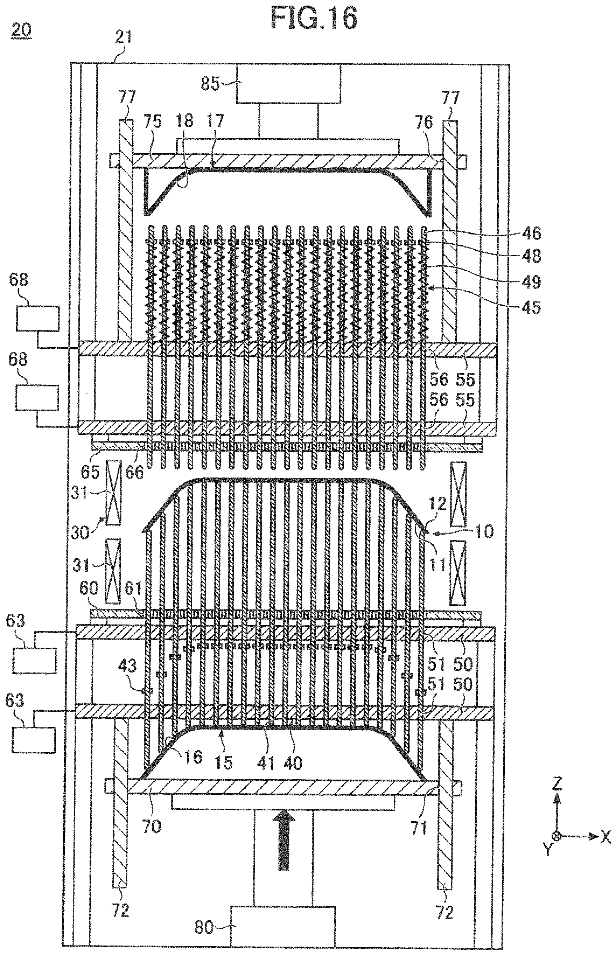

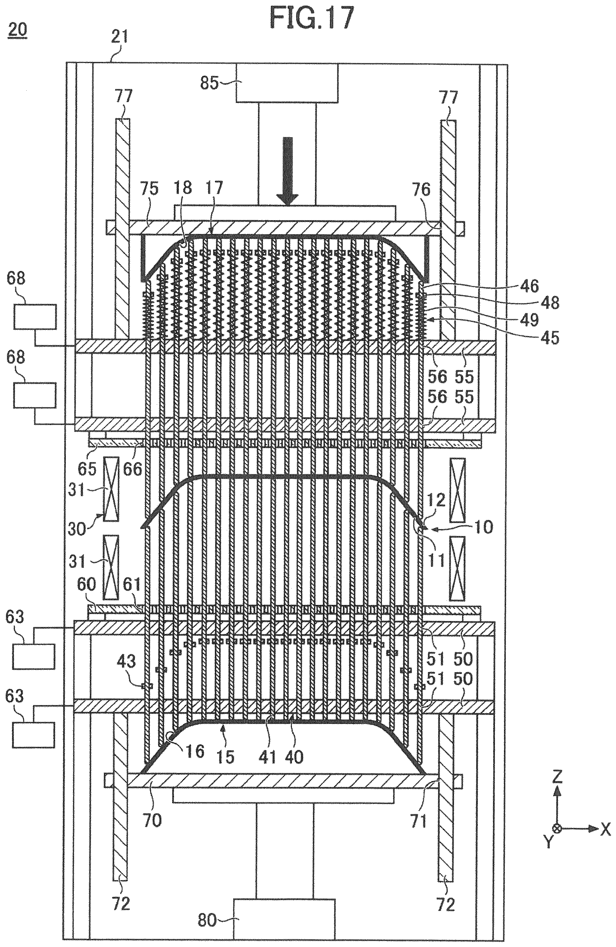

FIG. 15 is a diagram illustrating a bending apparatus of a third embodiment. FIG. 16 is a diagram illustrating an example of a state of the first movable plate illustrated in FIG. 15 at the time of completion of raising of the first movable plate. FIG. 17 is a diagram illustrating an example of a state of the second movable plate illustrated in FIG. 16 at the time of completion of lowering of the second movable plate. The bending apparatus 20 includes a heater 30, a first pin group 40, a first guide plate 50, a first insulation plate 60, a first cooler 63, a first movable plate 70, and a first moving mechanism 80. The bending apparatus 20 also includes a second pin group 45, a second guide plate 55, a second insulation plate 65, a second cooler 68, a second movable plate 75, and a second moving mechanism 85. In addition, the bending apparatus 20 includes a control device 90 (see FIG. 1). Hereinafter, the differences between the present embodiment, the first embodiment, and the second embodiment will be mainly described.

The bending apparatus 20 of the present embodiment includes a first pin group 40, a first guide plate 50, a first insulation plate 60, and a first movable plate 70 below the glass plate 10. The first main surface 11 of the glass plate 10 is the bottom surface of the glass plate 10. The upper end portion of the first pins 41 contacts the first main surface 11 of the glass plate 10 and the lower end portion of the first pins 41 contacts the first curved surface 16 of the first mold 15.

The first movable plate 70 is disposed below the first guide plate 50 which guides the first pin group 40 in order to raise the first pin group 40 at a first curved surface 16 of the first mold 15. Thus, the first movable plate 70 is disposed on an opposite side to the glass plate 10 with respect to the first guide plate 50, and for example, the first movable plate 70 is disposed below the first guide plate 50. The first mold 15 is installed on the top surface of the first movable plate 70 with the first curved surface 16 facing up.

The bending apparatus 20 of the present embodiment includes a second pin group 45, a second guide plate 55, a second insulation plate 65, a second movable plate 75, and the like above the glass plate 10. The second main surface 12 of the glass plate 10 is the top surface of the glass plate 10. The lower end portion of the second pins 46 contacts the second main surface 12 of the glass plate 10 and the upper end portion of the second pins 46 contacts the second curved surface 18 of the second mold 17.

The second mold 17 is installed on the second movable plate 75. The second movable plate 75 is disposed above the second guide plate 55 which guides the second pin group 45 in order to lower the second pin group 45 at a second curved surface 18 of the second mold 17. Thus, the second movable plate 75 is disposed on an opposite side to the glass plate 10 with respect to the second guide plate 55, and for example, the second movable plate 75 is disposed above the second guide plate 55. The second mold 17 is installed on the bottom surface of the second movable plate 75 with the second curved surface 18 facing up.

For example, in the second curved surface 18 of the second mold 17, a cross-sectional shape perpendicular to the Y-axis direction is a curved shape and a cross-sectional shape perpendicular to the X-axis direction is a linear shape. The shape of the second curved surface 18 of the second mold 17 is not particularly limited as long as the shape of the second curved surface 18 of the second mold 17 is similar to the shape of the first curved surface 16 of the first mold 15. For example, in the second curved surface 18 of the second mold 17, a cross-sectional shape perpendicular to the Y-axis direction may be a linear shape and a cross-sectional shape perpendicular to the X-axis direction is a curved shape. In addition, in the second curved surface 18 of the second mold 17, a cross-sectional shape perpendicular to the Y-axis direction may be a curved shape and a cross-sectional shape perpendicular to the X-axis direction may be a curved shape.

The second movable plate 75 has a plurality of second through holes 76 that penetrate the second movable plate 75 in the longitudinal direction of the first pins 41. A second guide rod 77 is inserted one by one into each of the plurality of second through holes 76. The second guide rod 77 is fixed to the upper second guide plate 55 and extends upwardly from the top surface of the upper second guide plate 55. The second movable plate 75 moves along the second guide rod 77 above the upper second guide plate 55.

The bending apparatus 20 includes a second moving mechanism 85 for moving the second movable plate 75 relative to the second guide plate 55 in the longitudinal direction of the first pins 41. The second moving mechanism 85 includes, for example, a servomotor and a ball screw that converts the rotational motion of the servomotor to linear motion of the second movable plate 75. The second moving mechanism 85 may be configured by a hydraulic cylinder or the like, and the configuration of the second moving mechanism 85 is not particularly limited.

The bending method first includes Step S301 of installing the first mold 15 to the first movable plate 70 and installing the second mold 17 to the second movable plate 75. The first mold 15 is disposed between the first movable plate 70 and the first pin group 40 as illustrated in FIG. 15. In addition, the second mold 17 is disposed between the second movable plate 75 and the second pin group 45.

A first flange 43 is formed on the outer peripheral surface of the first pins 41 in order to secure a workspace for installing the first mold 15 between the first movable plate 70 and the first pin group 40. The first flange 43 is formed, for example, in a circular shape. The outer diameter of the first flange 43 is larger than the inner diameter of the first guide hole 51, and the first flange 43 cannot pass through the first guide hole 51.

The first flange 43 is movable between the upper first guide plate 50 and the lower first guide plate 50. The first flange 43 abuts on the top surface of the lower first guide plate 50 to prevent the first pins 41 from spontaneously falling below a predetermined position. As a result, a workspace for installing the first mold 15 can be secured between the first pin group 40 and the first movable plate 70.

The bending method includes Step S102 of placing the glass plate 10 in a position where the glass plate 10 is heated. The glass plate 10 is held horizontally, for example, by the first pin group 40. At this time, the first flange 43 abuts on the top surface of the lower first guide plate 50.

A second flange 48 is formed on the outer peripheral surface of the second pins 46 in order to secure a space for placing the glass plate 10 between the first pin group 40 and the second pin group 45. The second flange 48 is formed, for example, in a circular shape. The outer diameter of the second flange 48 is larger than the inner diameter of the second guide hole 56, and the second flange 48 cannot pass through the second guide hole 56.

A second spring 49 is disposed between the second flange 48 formed on the outer peripheral surface of the second pin 46 and the upper second guide plate 55. The second spring 49 is disposed on each of the second pins 46, is deformed in accordance with the movement of the second pins 46, and imparts a repulsive force to the second pins 46 in a direction opposite to the direction of the movement of the second pins 46.

The second spring 49 prevents the second pin 46 from spontaneously falling below a predetermined position due to its elastic restoring force. As a result, a space for placing the glass plate 10 can be securely provided between the second pin group 45 and the first pin group 40. The arrangement of the second springs 49 is not limited to the arrangement illustrated in FIG. 15 or the like.

The bending method includes Step S302 of lowering the second movable plate 75 to bring the second movable plate 75 closer to the second guide plate 55. The Step S302 may be performed before the raising of the first movable plate 70 (Step S105) and the bending deformation of the glass plate 10 (Step S106). In the present embodiment, the Step S302 is performed after Steps S105 and S106. The second moving mechanism 85 lowers the second movable plate 75 so that the second curved surface 18 of the second mold 17 contacts three or more of the second pins 46 in a predetermined order, and the three or more of the first pins 41 start lowering in a predetermined order. As a result, the lower end portion of the second pin group 45 forms a three-dimensional curved surface having the same shape as the second curved surface 18 of the second mold 17.

The bending method includes Step S303 of pressing the heated glass plate 10 between the first pin group 40 and the second pin group 45. The Step S303 may be started after the second movable plate 75 starts lowering (Step S302). For example, the Step S302 may be started during the step of lowering the second movable plate 75 (Step S302) .

The lower end portion of the three or more of the first pins 41 contacts the first curved surface 16 of the first mold 15, and the upper end portion of the three or more of the first pins 41 is positioned at the apex of the triangular polygon that constitutes the three-dimensional curved surface. The three-dimensional curved surface has the same shape as the first curved surface 16 of the first mold 15.

The upper end portion of the three or more of the second pins 46 contacts the second curved surface 18 of the second mold 17, and the lower end portion of the three or more of the second pins 46 is positioned at the apex of the triangular polygon that constitutes the three-dimensional curved surface. The three-dimensional curved surface has the same shape as the second curved surface 18 of the second mold 17.

The glass plate 10 can be bent and deformed more reliably than when gravity alone is used, because the heated glass plate 10 is pressurized between the first pin group 40 and the second pin group 45.

The bending method includes Step S304 of lowering the first movable plate 70 to separate the first movable plate 70 from the first guide plate 50 and to separate the second movable plate 75 from the second guide plate 55. The lowering of the first movable plate 70 and raising of the second movable plate 75 (Step S304) start after the glass plate 10 has been cooled and solidified (Step S107).

When the first moving mechanism 80 lowers the first movable plate 70, the first mold 15 moves down with the first movable plate 70, and the first pins 41 moves down by gravity. When the first flange 43 abuts the top surface of the lower first guide plate 50, the lowering of the first pins 41 stops. Subsequently, when the first mold 15 is further lowered with the first movable plate 70, the first curved surface 16 of the first mold 15 moves away from the first pins 41.

Further, when the second moving mechanism 85 raises the second movable plate 75, the second mold 17 is raised with the second movable plate 75. As a result, the second pins 46 are raised by elastic restoration force of the second springs 49. After the second pins 46 stop rising, the second mold 17 rises further together with the second movable plate 75, and the second curved surface 18 of the second mold 17 moves away from the second pins 46.

In the embodiment, the number of the second mold 17 is one, but a plurality of molds may be used. A single assembly is constituted in a plurality of second molds 17, and the assembly is installed to a single second movable plate 70. The mold fabrication costs and times can be reduced because the assembly is fabricated by dividing it into multiple second molds 17.

### [Modified Example of the Third Embodiment]

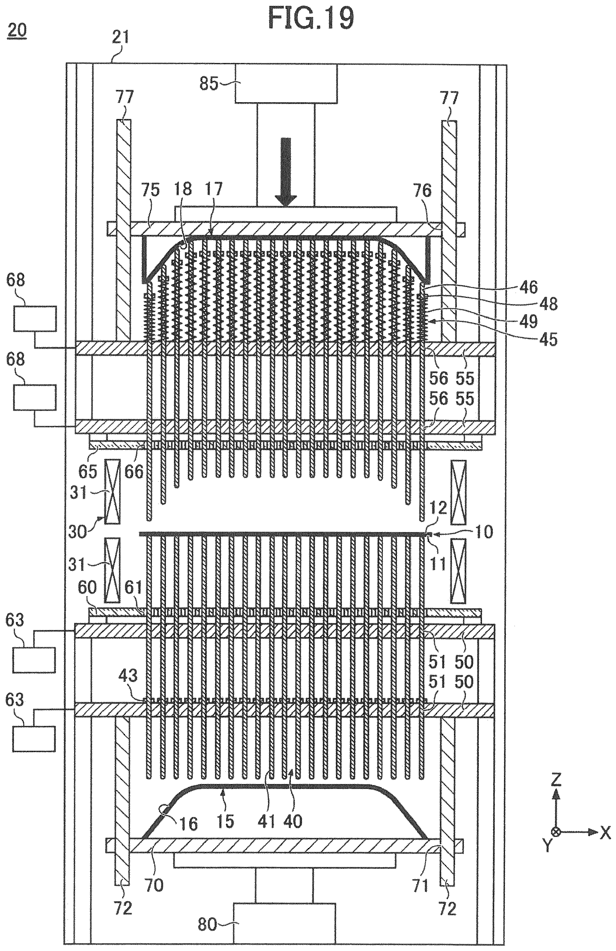

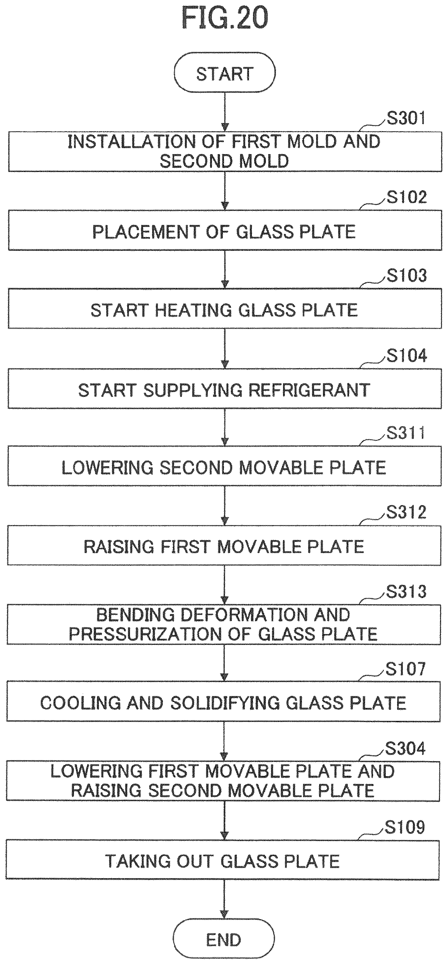

FIG. 19 is a diagram illustrating an example of a state of the second movable plate illustrated in FIG. 15 at the time of completion of lowering of the second movable plate. The state of the first movable plate at the time of completion of raising the first movable plate illustrated in FIG. 19 is omitted because the state is the same as the state illustrated in FIG. 17. FIG. 20 is a flowchart illustrating a bending method according to the modified example of the third embodiment. Hereinafter, the differences of the present modified example and the above third embodiment are mainly explained.

The bending method includes Step S311 of lowering the second movable plate 75 to bring the second movable plate 75 closer to the second guide plate 55. The Step S311 is performed before raising the first movable plate 70. The second moving mechanism 85 lowers the second movable plate 75 so that the second curved surface 18 of the second mold 17 contacts three or more of the second pins 46 in a predetermined order, and the three or more of the second pins 46 start lowering in the predetermined order. As a result, the lower end portion of the second pin group 45 forms a three-dimensional curved surface having the same shape as the second curved surface 18 of the second mold 17.

The bending method includes Step S312 of raising the first movable plate 70 to bring the first movable plate 70 closer to the first guide plate 50. The first moving mechanism 80 raises the first movable plate 70 so that the first curved surface 16 of the first mold 15 contacts three or more of the first pins 41 in a predetermined order, and the three or more of the first pins 41 start rising in the predetermined order. As a result, the upper end portion of the first pin group 40 forms a three-dimensional curved surface having the same shape as the first curved surface 16 of the first mold 15.

The bending method includes Step S313 of bending and deforming the heated glass plate 10 along the first pin group 40 and the second pin group 45 and of pressing the heated glass plate 10 between the first pin group 40 and the second pin group 45. The Step 313 may be started after the first movable plate 70 starts to rise (Step S312). For example, the Step S312 may be started during the step of rising the first movable plate 70 (Step S312).

The lower end portion of the three or more of the first pins 41 contacts the first curved surface 16 of the first mold 15, and the upper end portion of the three or more of the first pins 41 is positioned at the apex of the triangular polygon that constitutes the three-dimensional curved surface. The three-dimensional curved surface has the same shape as the first curved surface 16 of the first mold 15.

In contrast, the upper end portion of the three or more of the second pins 46 contacts the second curved surface 18 of the second mold 17, and the lower end portion of the three or more of the second pins 46 is positioned at the apex of the triangular polygon that constitutes the three-dimensional curved surface. The three-dimensional curved surface has the same shape as the second curved surface 18 of the second mold 17.

The glass plate 10 can be bent and deformed more reliably than when gravity alone is used, because the heated glass plate 10 is pressurized between the first pin group 40 and the second pin group 45.

For example, a flexible intermediate member may be disposed between the first pin group 40 and the glass plate 10 to prevent traces of the first pin group 40 from being left in the glass plate 10. For example, a metal fabric or a metal plate is used as the intermediate member.

Similarly, a flexible intermediate member may be disposed between the second pin group 45 and the glass plate 10 to prevent traces of the second pin group 45 from being left in the glass plate 10. For example, a metal fabric or a metal plate is used as the intermediate member.

This application claims priority under Japanese Patent Application No. 2018-197661, filed October 19, 2018.

### DESCRIPTION OF THE REFERENCE NUMERALS

- 10: Glass plate (forming plate)
- 11: First main surface
- 12: Second main surface
- 15: First mold
- 16: First curved surface
- 17: Second mold
- 18: Second curved surface
- 20: Bending apparatus
- 30: Heater
- 40: First pin group
- 41: First pin
- 45: Second pin group
- 46: Second pin
- 50: First guide plate
- 55: Second guide plate
- 60: First insulation plate
- 63: First cooler
- 65: Second insulation plate
- 68: Second cooler
- 70: First movable plate
- 75: Second movable plate
- 80: First moving mechanism
- 85: Second moving mechanism

## Claims

1. A bending apparatus (20) comprising:
a heater that heats a forming plate to be bent;
a first pin group (40) including three or more of first pins that contact a first main surface of the forming plate;
a first guide plate (50) which supports three or more of the first pins parallel to each other and independently movably supports three or more of the first pins in a longitudinal direction of the first pins;
a first movable plate (70) that is arranged on a side opposite to the forming plate with respect to the first guide plate and on which a first mold (15) having a first curved surface that contacts the first pin group is installed; and
a first moving mechanism (80) for moving the first movable plate relative to the first guide plate in the longitudinal direction of the first pins.

2. The bending apparatus according to claim 1, comprising a first insulation plate between the heater and the first guide plate.

3. The bending apparatus according to claim 1 or 2, comprising:
a flow passage inside the first guide plate; and
a first cooler for supplying a refrigerant to the flow passage in the first guide plate.

4. The bending apparatus according to any one of claims 1 to 3, wherein two or more of the first guide plates are placed at intervals in the longitudinal direction of the first pins.

5. The bending apparatus according to any one of claims 1 to 4, comprising:
a second pin group including three or more of second pins that contact a second main surface of the forming plate;
a second guide plate which supports three or more of the second pins parallel to each other and independently movably supports three or more of the second pins in the longitudinal direction; and
a repulsion generating unit which imparts a repulsive force to the second pins in which the repulsive force is applied to an opposite direction to a moving direction of the second pins by deforming the repulsion generating unit in accordance with the movement of three or more of the second pins.

6. The bending apparatus according to any one of claims 1 to 4 comprising:
a second pin group including three or more of second pins that contact a second main surface of the forming plate;
a second guide plate which supports three or more of the second pins parallel to each other and independently movably supports three or more of the second pins in the longitudinal direction;
a second movable plate that is arranged on the side opposite to the forming plate with respect to the second guide plate and on which a second mold having a second curved surface that contacts the second pin group is installed; and
a second moving mechanism for moving the second movable plate relative to the second guide plate in the longitudinal direction of the second pins.

7. The bending apparatus according to claim 5 or 6, comprising a second insulation plate between the heater and the second guide plate.

8. The bending apparatus according to any one of claims 5 to 7, comprising:
a flow passage inside the second guide plate; and
a second cooler for supplying a refrigerant to the flow passage in the second guide plate.

9. The bending apparatus according to any one of claims 5 to 8, wherein two or more of the second guide plates are placed at intervals in the longitudinal direction of the second pins.

10. A bending method comprising:
installing a first mold having a first curved surface that contacts a first pin group including three or more of first pins that contact a first main surface of a forming plate on a first movable plate disposed on a side opposite to the forming plate with respect to the first pin group;
bringing the first movable plate on which the first mold is installed closer to a first guide which supports three or more of the first pins parallel to each other and independently movably supports three or more of the first pins in the longitudinal direction; and
bending and deforming a heated forming plate along the three or more of the first pins in contact with the first curved surface of the first mold.

11. The bending method according to claim 10 comprising, supplying a refrigerant to a flow passage inside the first guide plate.

12. The bending method according to claim 10 or 11 comprising:
bringing the first movable plate on which the first mold is installed closer to a second guide which supports three or more of second pins that contact a second main surface of the forming plate parallel to each other and independently movably supports three or more of the second pins in the longitudinal direction;
deforming a repulsion generating unit that imparts a repulsive force to the second pins in which the repulsive force is applied to an opposite direction to a moving direction of the second pins by deforming the repulsion generating unit in accordance with the movement of three or more of the second pins; and
pressurizing the heated forming plate sandwiched between three or more of the first pins in contact with the first curved surface of the first mold and three or more of the second pins being pushed back by the repulsive force of the repulsion generating unit.

13. The bending method according to claim 10 or 11 comprising:
installing a second mold having a second curved surface that contacts a second pin group including three or more of second pins that contact a second main surface of the forming plate on a second movable plate disposed on a side opposite to the forming plate with respect to the second pin group;
bringing the second movable plate on which the second mold is installed closer to a second guide which supports three or more of the second pins parallel to each other and independently movably supports three or more of the second pins in the longitudinal direction; and
pressurizing the heated forming plate sandwiched between the first pin group in contact with the first curved surface of the first mold and the second pin group in contact with the second curved surface of the second mold.

14. The bending method according to claim 12 or 13 comprising, supplying a refrigerant to a flow passage inside the second guide plate.

## Patentansprüche

1. Eine Biegevorrichtung (20), die Folgendes umfasst:
eine Heizung, die eine zu biegende Formplatte erwärmt;
eine erste Stiftgruppe (40), die drei oder mehr erste Stifte beinhaltet, die eine erste Hauptfläche der Formplatte berühren;
eine erste Führungsplatte (50), die drei oder mehr der ersten Stifte parallel zueinander trägt und drei oder mehr der ersten Stifte in einer Längsrichtung der ersten Stifte unabhängig beweglich trägt;
eine erste bewegliche Platte (70), die auf einer der Formplatte in Bezug auf die erste Führungsplatte gegenüberliegenden Seite angeordnet ist und auf der ein erstes Formwerkzeug (*mold*) (15) mit einer ersten gekrümmten Oberfläche, die die erste Stiftgruppe berührt, installiert ist; und
einen ersten Bewegungsmechanismus (80) zum Bewegen der ersten beweglichen Platte relativ zur ersten Führungsplatte in Längsrichtung der ersten Stifte.

2. Die Biegevorrichtung nach Anspruch 1, die zwischen der Heizung und der ersten Führungsplatte eine erste Isolierplatte umfasst.

3. Die Biegevorrichtung nach Anspruch 1 oder 2, die Folgendes umfasst:
einen Strömungskanal innerhalb der ersten Führungsplatte; und
eine erste Kühlvorrichtung, um dem Strömungskanal in der ersten Führungsplatte ein Kühlmittel zuzuführen.

4. Die Biegevorrichtung nach irgendeinem der Ansprüche von 1 bis 3, wobei zwei oder mehr der ersten Führungsplatten in Längsrichtung der ersten Stifte in regelmäßigen Abständen angeordnet sind.

5. Die Biegevorrichtung nach irgendeinem der Ansprüche von 1 bis 4, die Folgendes umfasst:
eine zweite Stiftgruppe, die drei oder mehr zweite Stifte beinhaltet, die eine zweite Hauptfläche der Formplatte berühren;
eine zweite Führungsplatte, die drei oder mehr der zweiten Stifte parallel zueinander trägt und drei oder mehr der zweiten Stifte unabhängig voneinander in der Längsrichtung beweglich trägt; und
eine Abstoßungserzeugungseinheit, die eine Abstoßungskraft auf die zweiten Stifte ausübt, wobei die Abstoßungskraft in einer Richtung entgegengesetzt zu einer Bewegungsrichtung der zweiten Stifte ausgeübt wird, indem die Abstoßungserzeugungseinheit, in Übereinstimmung mit der Bewegung von drei oder mehr der zweiten Stifte, verformt wird.

6. Die Biegevorrichtung nach irgendeinem der Ansprüche von 1 bis 4, die Folgendes umfasst:
eine zweite Stiftgruppe, die drei oder mehr zweite Stifte beinhaltet, die eine zweite Hauptfläche der Formplatte berühren;
eine zweite Führungsplatte, die drei oder mehr der zweiten Stifte parallel zueinander trägt und drei oder mehr der zweiten Stifte unabhängig voneinander in der Längsrichtung beweglich trägt;
eine zweite bewegliche Platte, die auf der der Formungsplatte gegenüberliegenden Seite in Bezug auf die zweite Führungsplatte angeordnet ist und auf der ein zweites Formwerkzeug mit einer zweiten gekrümmten Oberfläche, die die zweite Stiftgruppe berührt, installiert ist; und
einen zweiten Bewegungsmechanismus zum Bewegen der zweiten beweglichen Platte relativ zur zweiten Führungsplatte in Längsrichtung der zweiten Stifte.

7. Die Biegevorrichtung nach Anspruch 5 oder 6, die zwischen der Heizung und der zweiten Führungsplatte eine zweite Isolierplatte umfasst.

8. Die Biegevorrichtung nach irgendeinem der Ansprüche von 5 bis 7, die Folgendes umfasst:
einen Strömungskanal innerhalb der zweiten Führungsplatte; und
eine zweite Kühlvorrichtung, um dem Strömungskanal in der zweiten Führungsplatte ein Kühlmittel zuzuführen.

9. Die Biegevorrichtung nach irgendeinem der Ansprüche von 5 bis 8, wobei zwei oder mehr der zweiten Führungsplatten in Längsrichtung der zweiten Stifte in regelmäßigen Abständen angeordnet sind.

10. Ein Biegeverfahren, das Folgendes umfasst:
Installieren eines ersten Formwerkzeugs (*mold*) mit einer ersten gekrümmten Oberfläche, die eine erste Stiftgruppe berührt, die drei oder mehr erste Stifte enthält, die eine erste Hauptoberfläche einer Formplatte auf einer ersten beweglichen Platte berühren, die auf einer der Formplatte in Bezug auf die erste Stiftgruppe gegenüberliegenden Seite angeordnet ist;
Annähern der ersten beweglichen Platte, auf der das erste Formwerkzeug installiert ist, an eine erste Führung, die drei oder mehr der ersten Stifte parallel zueinander trägt und unabhängig voneinander drei oder mehr der ersten Stifte in Längsrichtung beweglich trägt; und
Biegen und Verformen einer erhitzten Formplatte entlang der drei oder mehr der ersten Stifte in Kontakt mit der ersten gekrümmten Oberfläche des ersten Formwerkzeugs.

11. Das Biegeverfahren nach Anspruch 10, das das Zuführen eines Kühlmittels zu einem Strömungskanal innerhalb der ersten Führungsplatte umfasst.

12. Das Biegeverfahren nach Anspruch 10 oder 11, das Folgendes umfasst:
Annähern der ersten beweglichen Platte, auf der das erste Formwerkzeug installiert ist, an eine zweite Führung, die drei oder mehr zweite Stifte trägt, die eine zweite Hauptoberfläche der Formplatte parallel zueinander berühren und unabhängig voneinander drei oder mehr der zweiten Stifte in der Längsrichtung beweglich trägt;
Verformen einer Abstoßungserzeugungseinheit, die eine Abstoßungskraft auf die zweiten Stifte ausübt, wobei die Abstoßungskraft in einer zu einer Bewegungsrichtung der zweiten Stifte entgegengesetzten Richtung ausgeübt wird, durch Verformen der Abstoßungserzeugungseinheit in Übereinstimmung mit der Bewegung von drei oder mehr der zweiten Stifte; und
Druckbeaufschlagen der beheizten Formplatte, die sandwichartig angeordnet ist zwischen drei oder mehr der ersten Stifte, die in Kontakt mit der ersten gekrümmten Oberfläche der ersten Form stehen, und drei oder mehr der zweiten Stifte, die durch die Abstoßungskraft der Abstoßungserzeugungseinheit zurückgedrückt werden.

13. Das Biegeverfahren nach Anspruch 10 oder 11, das Folgendes umfasst:
Installieren eines zweiten Formwerkzeugs mit einer zweiten gekrümmten Oberfläche, die eine zweite Stiftgruppe berührt, die drei oder mehr zweite Stifte enthält, die eine zweite Hauptoberfläche der Formplatte auf einer zweiten beweglichen Platte berühren, die auf einer der Formplatte in Bezug auf die zweite Stiftgruppe gegenüberliegenden Seite angeordnet ist;
Annähern der zweiten beweglichen Platte, auf der die zweite Form installiert ist, an eine zweite Führung, die drei oder mehr der zweiten Stifte parallel zueinander trägt und drei oder mehr der zweiten Stifte in der Längsrichtung unabhängig beweglich trägt; und
Druckbeaufschlagen der beheizten Formplatte, die sandwichartig angeordnet ist zwischen der ersten Stiftgruppe, die in Kontakt mit der ersten gekrümmten Oberfläche der ersten Form steht, und der zweiten Stiftgruppe, die in Kontakt mit der zweiten gekrümmten Oberfläche der zweiten Form steht.

14. Das Biegeverfahren nach Anspruch 12 oder 13, das Folgendes umfasst: Zuführen eines Kühlmittels zu einem Strömungskanal innerhalb der zweiten Führungsplatte.

## Revendications

1. Un appareil de pliage ou encore de cintrage (*bending apparatus*) (20) comprenant :
un dispositif de chauffage qui chauffe une plaque de formage à cintrer ;
un premier groupe de broches (40) incluant trois ou plus de trois premières broches qui sont en contact avec une première surface principale de la plaque de formage ;
une première plaque de guidage (50) qui soutient trois ou plus de trois premières broches parallèlement les unes aux autres et qui soutient de manière mobile et indépendante trois ou plus de trois premières broches dans une direction longitudinale des premières broches ;
une première plaque mobile (70) qui est agencée sur un côté opposé à la plaque de formage par rapport à la première plaque de guidage et sur laquelle est installé un premier moule (15) ayant une première surface incurvée qui est en contact avec le premier groupe de broches ; et
un premier mécanisme de déplacement (80) pour déplacer la première plaque mobile par rapport à la première plaque de guidage dans la direction longitudinale des premières broches.

2. L'appareil de cintrage d'après la revendication 1, comprenant une première plaque d'isolation entre le dispositif de chauffage et la première plaque de guidage.

3. L'appareil de cintrage d'après la revendication 1 ou 2, comprenant :
un passage d'écoulement à l'intérieur de la première plaque de guidage ; et
un premier refroidisseur pour fournir un réfrigérant au passage d'écoulement dans la première plaque de guidage.

4. L'appareil de cintrage d'après l'une quelconque des revendications de 1 à 3, sachant que deux ou plus que deux des premières plaques de guidage sont placées à des intervalles dans la direction longitudinale des premières broches.

5. L'appareil de cintrage d'après l'une quelconque des revendications de 1 à 4, comprenant :
un deuxième groupe de broches incluant trois ou plus de trois deuxièmes broches qui sont en contact avec une deuxième surface principale de la plaque de formage ;
une deuxième plaque de guidage qui soutient trois ou plus de trois deuxièmes broches parallèlement les unes aux autres et qui soutient de manière mobile et indépendante trois ou plus de trois deuxièmes broches dans la direction longitudinale ; et
une unité de génération de répulsion qui communique une force de répulsion aux deuxièmes broches, sachant que la force de répulsion est appliquée dans une direction opposée à une direction de déplacement des deuxièmes broches en déformant l'unité de génération de répulsion en fonction du mouvement de trois ou plus de trois deuxièmes broches.

6. L'appareil de cintrage d'après l'une quelconque des revendications de 1 à 4 comprenant :
un deuxième groupe de broches incluant trois ou plus de trois deuxièmes broches qui sont en contact avec une deuxième surface principale de la plaque de formage ;
une deuxième plaque de guidage qui soutient trois ou plus de trois deuxièmes broches parallèlement les unes aux autres et qui soutient de manière mobile et indépendante trois ou plus de trois deuxièmes broches dans la direction longitudinale ;
une deuxième plaque mobile qui est agencée sur le côté opposé à la plaque de formage par rapport à la deuxième plaque de guidage et sur laquelle est installé un deuxième moule ayant une deuxième surface incurvée qui est en contact avec le deuxième groupe de broches ; et
un deuxième mécanisme de déplacement pour déplacer la deuxième plaque mobile par rapport à la deuxième plaque de guidage dans la direction longitudinale des deuxièmes broches.

7. L'appareil de cintrage d'après la revendication 5 ou 6, comprenant une deuxième plaque d'isolation entre le dispositif de chauffage et la deuxième plaque de guidage.

8. L'appareil de cintrage d'après l'une quelconque des revendications de 5 à 7, comprenant :
un passage d'écoulement à l'intérieur de la deuxième plaque de guidage ; et
un deuxième refroidisseur pour fournir un réfrigérant au passage d'écoulement dans la deuxième plaque de guidage.

9. L'appareil de cintrage d'après l'une quelconque des revendications de 5 à 8, sachant que deux ou plus de deux des deuxièmes plaques de guidage sont placées à des intervalles dans la direction longitudinale des deuxièmes broches.

10. Un procédé de cintrage comprenant le fait de :
installer un premier moule ayant une première surface incurvée qui est en contact avec un premier groupe de broches incluant trois ou plus de trois premières broches qui sont en contact avec une première surface principale d'une plaque de formage sur une première plaque mobile agencée sur un côté opposé à la plaque de formage par rapport au premier groupe de broches ;
rapprocher la première plaque mobile, sur laquelle le premier moule est installé, d'un premier guide qui soutient trois ou plus de trois des premières broches parallèlement les unes aux autres et qui soutient de manière mobile et indépendante trois ou plus de trois des premières broches dans la direction longitudinale ; et de
cintrer et déformer une plaque de formage chauffée le long des trois ou plus de trois premières broches en contact avec la première surface incurvée du premier moule.

11. Le procédé de cintrage d'après la revendication 10. comprenant le fait de fournir un réfrigérant à un passage d'écoulement à l'intérieur de la première plaque de guidage.

12. Le procédé de cintrage d'après la revendication 10 ou 11 comprenant le fait de :
rapprocher la première plaque mobile, sur laquelle le premier moule est installé, d'un deuxième guide qui soutient trois ou plus de trois deuxièmes broches qui sont en contact avec une deuxième surface principale de la plaque de formage parallèlement les unes aux autres et qui soutient de manière mobile et indépendante trois ou plus de trois deuxièmes broches dans la direction longitudinale ;
déformer une unité de génération de répulsion qui communique une force de répulsion aux deuxièmes broches, sachant que la force de répulsion est appliquée dans une direction opposée à une direction de déplacement des deuxièmes broches en déformant l'unité de génération de répulsion en fonction du mouvement de trois ou plus de trois des deuxièmes broches ; et de
pressuriser la plaque de formage chauffée prise en sandwich entre trois ou plus de trois premières broches en contact avec la première surface incurvée du premier moule et trois ou plus de trois deuxièmes broches repoussées par la force de répulsion de l'unité de génération de répulsion.

13. Le procédé de cintrage d'après la revendication 10 ou 11 comprenant le fait de :
installer un deuxième moule ayant une deuxième surface incurvée qui est en contact avec un deuxième groupe de broches incluant trois ou plus de trois deuxièmes broches qui sont en contact avec une deuxième surface principale de la plaque de formage sur une deuxième plaque mobile agencée sur un côté opposé à la plaque de formage par rapport au deuxième groupe de broches ;
rapprocher la deuxième plaque mobile, sur laquelle le deuxième moule est installé, d'un deuxième guide qui soutient trois ou plus de trois des deuxièmes broches parallèlement les unes aux autres et qui soutient de manière mobile et indépendante trois ou plus de trois des deuxièmes broches dans la direction longitudinale ; et de
pressuriser la plaque de formage chauffée prise en sandwich entre le premier groupe de broches en contact avec la première surface incurvée du premier moule et le deuxième groupe de broches en contact avec la deuxième surface incurvée du deuxième moule.

14. Le procédé de cintrage d'après la revendication 12 ou 13 comprenant le fait de fournir un réfrigérant à un passage d'écoulement à l'intérieur de la deuxième plaque de guidage.
